# EUROPEAN PATENT APPLICATION

(11) **EP 4 641 987 A1**
(43) Date of publication of application: **29.10.2025**
(21) Application number: 22968875.9
(22) Date of filing: 21.12.2022
(51) Int. Cl.: H04L 27/00

(54) **WIRELESS COMMUNICATION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: CAO, Jianfei, Dongguan, Guangdong 523860 (CN); SHI, Zhihua, Dongguan, Guangdong 523860 (CN)
(74) Representative: Mewburn Ellis LLP
(86) International application number: PCT/CN2022/140558
(87) International publication number: WO 2024/130573

(57) **Abstract**

The embodiments of the present application provide a wireless communication method, a terminal device, and a network device. The terminal device can indicate whether it supports a target type of spatial filter prediction mechanism, and within the target type of spatial filter prediction mechanism, can predict a spatial domain group spatial filter prediction on the basis of one or more network models, thereby improving the performance of a beam management system. The wireless communication method comprises: a terminal device sending first capability information; wherein the first capability information is used for indicating whether the terminal device supports a target type of spatial filter prediction mechanism, and within the target type of spatial filter prediction mechanism, one or more network models are used to predict a spatial domain group spatial filter.

## Description

### TECHNICAL FIELD

Embodiments of the present disclosure relate to the field of communications, and in particular, to a wireless communication method, a terminal device, and a network device.

### BACKGROUND

In a new radio (NR) system, artificial intelligence (AI)/machine learning (ML) may be introduced to improve system performance. For example, AI/ML models are introduced to perform a beam (pair) prediction, that is, the beam (pair) prediction is performed through trained AI/ML models, which improves the performance of the beam management system. However, a group beam (pair) prediction is introduced in the NR evolution, and how to implement the group beam (pair) prediction based on AI/ML models is a problem to be solved.

### SUMMARY

Embodiments of the present disclosure provide a wireless communication method, a terminal device and a network device. The terminal device may indicate whether the terminal device supports a target type of spatial filter prediction mechanism, and within the target type of spatial filter prediction mechanism, a spatial-domain group spatial filter prediction may be performed based on one or more network models, thereby improving the performance of the beam management system.

In a first aspect, a wireless communication method is provided, and the method includes:
transmitting, by a terminal device, first capability information;
where the first capability information is used for indicating whether the terminal device supports a target type of spatial filter prediction mechanism, and within the target type of spatial filter prediction mechanism, one or more network models are used to perform a spatial-domain group spatial filter prediction.

In a second aspect, a wireless communication method is provided, and the method includes:
receiving, by a network device, first capability information;
where the first capability information is used for indicating whether a terminal device supports a target type of spatial filter prediction mechanism, and within the target type of spatial filter prediction mechanism, one or more network models are used to perform a spatial-domain group spatial filter prediction.

In a third aspect, a terminal device is provided, which is configured to perform the method in the first aspect.

Specifically, the terminal device includes a functional module configured to perform the method in the above first aspect.

In a fourth aspect, a network device is provided, which is configured to perform the method in the second aspect.

Specifically, the network device includes a functional module configured to perform the method in the above second aspect.

In a fifth aspect, a terminal device is provided, which includes a processor and a memory. The memory is configured to store a computer program, and the processor is configured to call the computer program stored in the memory and run the computer program, to enable the terminal device to perform the method in the above first aspect.

In a sixth aspect, a network device is provided, which includes a processor and a memory. The memory is configured to store a computer program, and the processor is configured to call the computer program stored in the memory and run the computer program, to enable the network device to perform the method in the above second aspect.

In a seventh aspect, an apparatus is provided to implement the method in any one of the first and second aspects above.

Specifically, the apparatus includes: a processor, which is configured to call a computer program from a memory and run the computer program, to enable a device equipped with the apparatus to perform the method in any one of the first and second aspects described above.

In an eighth aspect, a computer-readable storage medium is provided, which is configured to store a computer program, the computer program enabling a computer to perform the method in any one of the first and second aspects above.

In a ninth aspect, a computer program product is provided, which includes computer program instructions, the computer program instructions enabling a computer to perform the method in any one of the first and second aspects above.

In a tenth aspect, a computer program is provided. The computer program, when executed on a computer, enables the computer to perform the method in any one of the first and second aspects above.

Based on the above technical solutions, the terminal device may indicate whether the terminal device supports a target type of spatial filter prediction mechanism, and within the target type of spatial filter prediction mechanism, a spatial-domain group spatial filter prediction may be performed based on one or more network models, thereby improving the performance of the beam management system.

### BRIEF DESCRIPTION OF THE DRAWINGS

FIG. 1 is a schematic diagram of a communication system architecture to which embodiments of the present disclosure are applicable.
FIG. 2 is a schematic diagram of the connection of neurons in a neural network provided in the present disclosure.
FIG. 3 is a schematic structural diagram of a neural network provided in the present disclosure.
FIG. 4 is a schematic diagram of a convolutional neural network provided in the present disclosure.
FIG. 5 is a schematic structural diagram of an LSTM unit provided in the present disclosure.
FIG. 6 is a schematic diagram of a downlink beam sweeping process provided in the present disclosure.
FIG. 7 is a schematic diagram of another downlink beam sweeping process provided in the present disclosure.
FIG. 8 is a schematic diagram of yet another downlink beam sweeping process provided in the present disclosure.
FIG. 9 is a schematic diagram of a spatial-domain beam prediction model provided in the present disclosure.
FIG. 10 is a schematic diagram of another spatial-domain beam prediction model provided in the present disclosure.
FIG. 11 is a schematic flowchart of a wireless communication method provided in accordance with embodiments of the present disclosure.
FIG. 12 is a schematic diagram of a first type of spatial filter prediction mechanism provided in accordance with embodiments of the present disclosure.
FIG. 13 is a schematic diagram of a second type of spatial filter prediction mechanism provided in accordance with embodiments of the present disclosure.
FIG. 14 is a schematic diagram of a beam (pair) prediction model under a first type of spatial filter prediction mechanism provided in embodiments of the present disclosure.
FIG. 15 is a schematic diagram of an L1-RSRP prediction model under a first type of spatial filter prediction mechanism provided in embodiments of the present disclosure.
FIG. 16 is a schematic diagram of a beam (pair) prediction model under a second type of spatial filter prediction mechanism provided in embodiments of the present disclosure.
FIG. 17 is a schematic diagram of an L1-RSRP prediction model under a second type of spatial filter prediction mechanism provided in embodiments of the present disclosure.
FIG. 18 is a schematic block diagram of a terminal device provided in accordance with embodiments of the present disclosure.
FIG. 19 is a schematic block diagram of a network device provided in accordance with embodiments of the present disclosure.
FIG. 20 is a schematic block diagram of a communication device provided in accordance with embodiments of the present disclosure.
FIG. 21 is a schematic block diagram of an apparatus provided in accordance with embodiments of the present disclosure.
FIG. 22 is a schematic block diagram of a communication system provided in accordance with embodiments of the present disclosure.

### DETAILED DESCRIPTION

Technical solutions in the embodiments of the present disclosure will be described below with reference to the drawings in the embodiments of the present disclosure. Obviously, the described embodiments are only part of the embodiments of the present disclosure, rather than all of the embodiments. With respect to the embodiments of the present disclosure, all other embodiments acquired by ordinary technicians in the field without making any creative work shall fall within the scope of protection of the present disclosure.

The technical solutions of the embodiments of the present disclosure may be applied to various communication systems, such as: a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an NR system evolution system, an LTE-based access to unlicensed spectrum (LTE-U) system, an NR-based access to unlicensed spectrum (NR-U) system, a non-terrestrial networks (NTN) system, a universal mobile telecommunication system (UMTS), wireless local area networks (WLAN), internet of things (IoT), a wireless fidelity (WiFi), a 5th-generation (5G) system, a 6th-generation communication (6G) system, or other communication systems.

Generally speaking, conventional communication systems support a limited number of connections and are easy to be implemented. However, with the development of communication technology, mobile communication systems will not only support conventional communications, but will also support, for example, device to device (D2D) communication, machine to machine (M2M) communication, machine type communication (MTC), vehicle to vehicle (V2V) communication, sidelink (SL) communication, vehicle to everything (V2X) communication, or the like. The embodiments of the present disclosure may also be applied to these communication systems.

In some embodiments, a communication system in the embodiments of the present disclosure may be applied to a carrier aggregation (CA) scenario, a dual connectivity (DC) scenario, a standalone (SA) networking scenario, or a non-standalone (NSA) networking scenario.

In some embodiments, a communication system in the embodiments of the present disclosure may be applied to an unlicensed spectrum, which may also be considered as a shared spectrum. Alternatively, the communication system in the embodiments of the present disclosure may be applied to a licensed spectrum, which may also be considered as an unshared spectrum.

In some embodiments, a communication system in the embodiments of the present disclosure may be applied to the FR1 band (corresponding to a frequency range of 410 MHz to 7.125 GHz), may also be applied to the FR2 band (corresponding to a frequency range of 24.25 GHz to 52.6 GHz), and may further also be applied to new bands such as a high-frequency frequency band corresponding to a frequency range of 52.6 GHz to 71 GHz or a frequency range of 71 GHz to 114.25 GHz.

The embodiments of the present disclosure describe various embodiments in conjunction with a network device and a terminal device. Here, the terminal device may also be referred to as a user equipment (UE), an access terminal, a user unit, a user station, a mobile station, a mobile platform, a remote station, a remote terminal, a mobile device, a user terminal, a terminal, a wireless communication device, a user agent or user device, or the like.

The terminal device may be a station (STATION, ST) in a WLAN, which may be a cellular phone, a cordless phone, a session initiation protocol (SIP) phone, a wireless local loop (WLL) station, a personal digital assistant (PDA) device, a handheld device with a wireless communication function, a computing device or other processing device connected to a wireless modem, a vehicle-mounted device, a wearable device, a terminal device in a next-generation communication system (such as an NR network), a terminal device in a future evolved public land mobile network (PLMN) network, or the like.

In the embodiments of the present disclosure, the terminal device may be deployed on land, including indoors or outdoors, handheld, wearable or vehicle-mounted; alternatively, the terminal device may be deployed on the water surface (such as on ships); further alternatively, the terminal device may be deployed in the air (such as on airplanes, balloons and satellites).

In the embodiments of the present disclosure, the terminal device may be a mobile phone, a pad, a computer with wireless transceiver function, a virtual reality (VR) terminal device, an augmented reality (AR) terminal device, a wireless terminal device in industrial control, a wireless terminal device in self-driving, a wireless terminal device in remote medical, a wireless terminal device in a smart grid, a wireless terminal device in transportation safety, a wireless terminal device in a smart city, a wireless terminal device in a smart home, an in-vehicle communication device, a wireless communication chip/application specific integrated circuit (ASIC)/system on chip (SoC), or the like.

As an example rather than a limitation, the terminal device, in the embodiments of the present disclosure, may be a wearable device. The wearable device may also be called a wearable smart device, which is a general term of wearable devices developed by intelligent design on daily wear by applying wearable technology, such as glasses, gloves, watches, clothing and shoes. The wearable device is a portable device that is worn directly on the body or integrated into the user's clothing or accessories. The wearable device not only is a hardware device, but also implements powerful functions through software support, data interaction, and cloud interaction. In a broad sense, wearable smart devices include those that are fully functional, large in size, and can implement complete or partial functions without relying on smartphones, such as smart watches or smart glasses, as well as those that only focus on a certain type of application function and need to be used in conjunction with other devices (such as smartphones), such as various smart bracelets and smart jewelry for monitoring vital signs.

In the embodiments of the present disclosure, the network device may be a device for communicating with a mobile device. The network device may be an access point (AP) in WLAN, a base station (Base Transceiver Station, BTS) in GSM or CDMA, a base station (NodeB, NB) in WCDMA, an evolution base station (Evolution NodeB, eNB or eNodeB) in LTE, a relay station or access point, a vehicle-mounted device, a wearable device, a network device or base station (gNB) or transmission reception point (TRP) in an NR network, a network device in a future evolved PLMN network or in an NTN network, or the like.

As an example rather than a limitation, in the embodiments of the present disclosure, the network device may have a mobile feature, for example, the network device may be a mobile device. In some embodiments, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. In some embodiments, the network device may be a base station installed on land, water, or the like.

In the embodiments of the present disclosure, the network device may provide services for a cell, and the terminal device may communicate with the network device through transmission resources (e.g., frequency domain resources, or spectrum resources) used by the cell. The cell may be a cell corresponding to the network device (e.g., a base station). The cell may belong to a macro base station or a base station corresponding to a small cell. The small cells here may include: a metro cell, a micro cell, a pico cell, a femto cell, or the like. These small cells have the characteristics of small coverage and low transmission power, and are suitable for providing high-speed data transmission services.

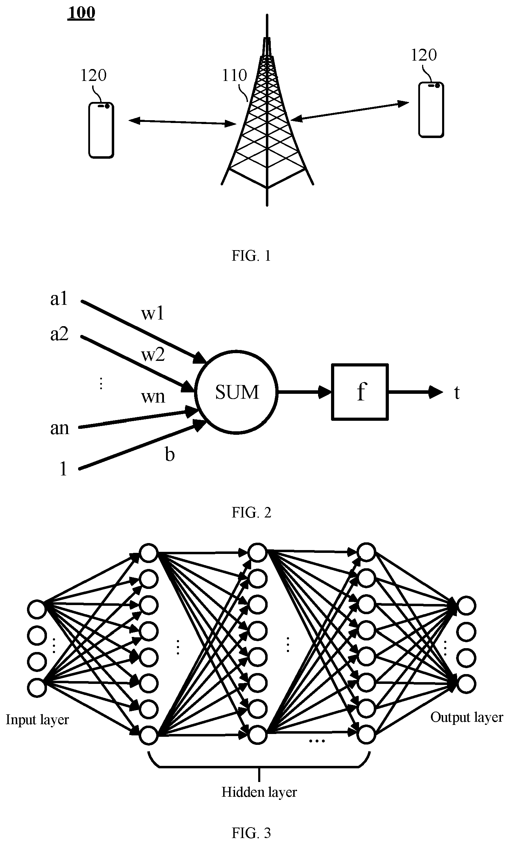

Exemplarily, a communication system 100 to which the embodiments of the present disclosure are applicable is illustrated in FIG. 1. The communication system 100 may include a network device 110, in which the network device 110 may be a device for communicating with a terminal device 120 (or referred to as a communication terminal or terminal). The network device 110 may provide communication coverage for a specific geographical area, and may communicate with terminal devices located within the coverage area.

FIG. 1 exemplarily shows one network device and two terminal devices. In some embodiments, the communication system 100 may include a plurality of network devices, each of which may have a coverage area in which another number of terminal devices may be included, which is not limited in the present disclosure.

In some embodiments, the communication system 100 may further include other network entities such as a network controller and a mobility management entity, which are not limited in the embodiments of the present disclosure.

It should be understood that a device having a communication function in the network/system in the embodiments of the present disclosure may be referred to as a communication device. Taking the communication system 100 illustrated in FIG. 1 as an example, the communication device may include a network device 110 and a terminal device 120 with communication functions. The network device 110 and the terminal device 120 may be the specific devices described above and will not be repeated herein. The communication device may further include other devices in the communication system 100, such as a network controller, a mobile management entity and other network entities, which are not limited in the embodiments of the present disclosure.

It should be understood that the terms "system" and "network" are often used interchangeably herein. The term "and/or" herein is only an association to describe associated objects, which indicates that there may be three kinds of relationships. For example, A and/or B may indicate three cases where: A exists alone, both A and B exist, and B exists alone. In addition, a character "/" herein generally indicates that the related objects before and after the character "/" are in an "or" relationship.

The terms used in the detailed description of the present disclosure are only for the purpose of explaining specific embodiments of the present disclosure, and are not intended to limit the present disclosure. The terms "first", "second", "third", "fourth", etc., in the specification, claims and drawings of the present disclosure are used to distinguish different objects, rather than to describe a specific order. In addition, the terms "comprise/include", "have" and any variations thereof, are intended to cover non-exclusive inclusion.

It should be understood that the "indicate" involved in the embodiments of the present disclosure may mean a direct indication, may mean an indirect indication, or may represent an associated relationship. For example, A indicates B, which may mean that A directly indicates B, for example, B may be acquired by A; or may mean that A indicates B indirectly, for example, A indicates C, and B may be acquired through C; or may mean that there is an association between A and B.

In the description of the embodiments of the present disclosure, the term "corresponding" may mean a direct correspondence or indirect correspondence between two elements, or mean that there is an association between the two elements, or mean a relationship such as indicating and being indicated, or configuring and being configured.

In the embodiments of the present disclosure, "being pre-defined" or "being pre-configured" may be implemented by pre-saving corresponding codes, a table or other forms capable of being used to indicate related information in a device (e.g., including the terminal device and the network device), and the specific implementation thereof is not limited in the present disclosure. For example, "being pre-defined" may indicate being defined in a protocol.

In the embodiments of the present disclosure, the "protocol" may refer to a standard protocol in the communication field, for example, may be an evolution of an existing LTE protocol, NR protocol, Wi-Fi protocol, or protocol related to other communication systems. The type of the protocol is not limited in the present disclosure.

In order to better understand the embodiments of the present disclosure, a neural network and machine learning related to the present disclosure are described.

A neural network (NN) is a computing model consisting of a plurality of interconnected neuron nodes, where a connection between nodes represents a weighted value from an input signal to an output signal, referred to as a weight; each node performs a weighted summation (SUM) on different input signals and performs an output through a specific activation function (f). FIG. 2 is a schematic diagram of a neuron structure, where a1, a2, ..., an represent input signals, w1, w2, ..., wn represent weights, f represents the activation function, and t represents the output.

A simple neural network is illustrated in FIG. 3, which includes an input layer, a hidden layer, and an output layer. Different outputs may be generated through different connection methods, weights, and activation functions of a plurality of neurons, thereby fitting a mapping from input to output. Each node at the present level is connected to all nodes at its next level, making the neural network a fully connected neural network, which can also be referred to as a deep neural network (DNN).

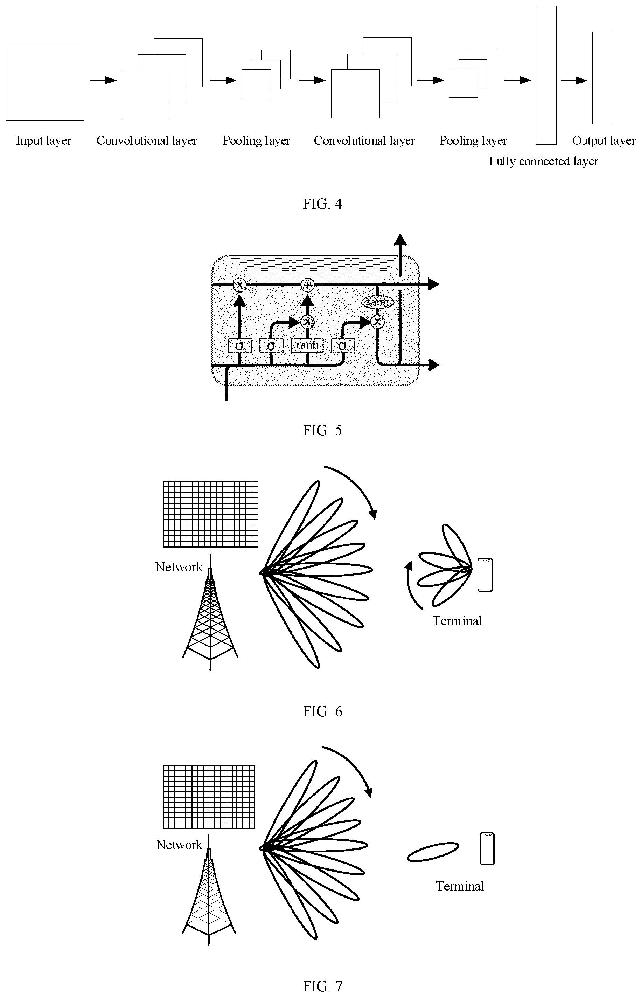

The basic structure of a convolutional neural network (CNN) includes: an input layer, multiple convolutional layers, multiple pooling layers, a fully connected layer, and an output layer, as illustrated in FIG. 4. Each neuron of a convolution kernel in the convolution layer is locally connected to an input therefor, and the pooling layer is introduced to extract the local maximum or average features of a certain layer, which effectively reduces the parameters of the network and mines the local features, so that the convolutional neural network can converge quickly and obtain excellent performance.

Deep learning uses a deep neural network with multiple hidden layers, which greatly improves the network's ability to learn features and can fit a complex nonlinear mapping from input to output and thus is widely used in speech and image processing fields. In addition to the deep neural network, the deep learning further includes common basic structures such as a convolutional neural network (CNN) and a recurrent neural network (RNN) for different tasks.

The basic structure of a convolutional neural network includes: an input layer, multiple convolutional layers, multiple pooling layers, a fully connected layer, and an output layer, as illustrated in FIG. 4. Each neuron of a convolution kernel in the convolution layer is locally connected to an input thereof, and the pooling layer is introduced to extract the local maximum or average features of a certain layer, which effectively reduces the parameters of the network and mines the local features, so that the convolutional neural network can converge quickly and obtain excellent performance.

RNN, a neural network for modeling sequential data, has achieved remarkable results in the field of natural language processing, such as machine translation, speech recognition and other applications. Specifically, the network device memorizes the information from the past moments and uses it in the calculation of the current output, that is, nodes between the hidden layers are no longer unconnected but connected, and the input of the hidden layer includes not only the output of the input layer but also the output of the hidden layer at the previous moment. Commonly used RNNs include structures such as a long short-term memory (LSTM) and a gated recurrent unit (GRU). FIG. 5 shows a basic LSTM unit structure, which may include a tanh activation function. Unlike RNN, which only considers the most recent state, a cell state of LSTM will determine which states should be retained and which states should be forgotten, thus solving the defects of traditional RNN in long-term memory.

In order to better understand the embodiments of the present disclosure, the NR beam management related to the present disclosure is described.

In an NR system, millimeter wave frequency band communications are introduced, and corresponding beam management mechanisms are also introduced, including beam management that may be divided into uplink and downlink. Downlink beam management includes downlink beam sweeping, terminal (UE) beam measurement and reporting, network (NW) downlink beam indication and other processes.

The downlink beam sweeping process may include three processes, namely P1, P2 and P3 processes. The P1 process means that the network device sweeps different transmit beams and the UE sweeps different receive beams; the P2 process means that the network device sweeps different transmit beams and the UE uses the same receive beam; and the P3 process means that the network device uses the same transmit beam and the UE sweeps different receive beams. Generally, the network device completes the above beam sweeping process by transmitting a downlink reference signal. Optionally, the downlink reference signal may include but is not limited to a synchronization signal block (SSB) and/or a channel state information reference signal (CSI-RS).

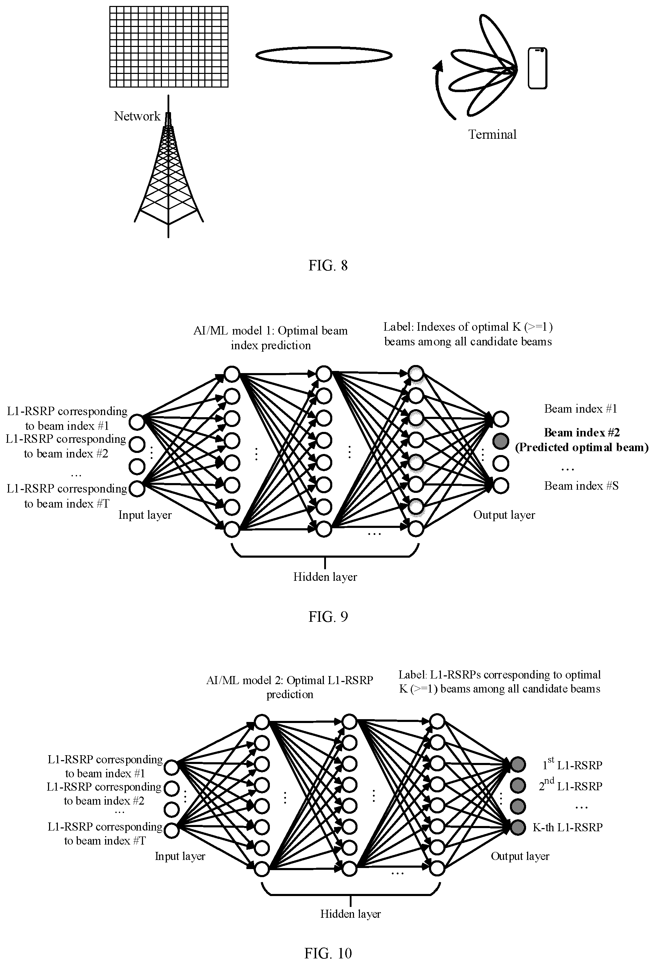

FIG. 6 is a schematic diagram of the P1 process (or the downlink full sweeping process), FIG. 7 is a schematic diagram of the P2 process, and FIG. 8 is a schematic diagram of the P3 process.

As illustrated in FIG. 6, in the P1 process, the network device traverses all transmit beams to transmit downlink reference signals, and the UE side traverses all receive beams to perform measurements and determine corresponding measurement results.

As illustrated in FIG. 7, in the P2 process, the network device traverses all transmit beams to transmit downlink reference signals, and the UE side uses a specific receive beam to perform measurements and determine the corresponding measurement results.

As illustrated in FIG. 8, in the P3 process, the network device may use a specific transmit beam to transmit a downlink reference signal, and the UE side traverses all receive beams to perform measurements and determine corresponding measurement results.

Traditional beam reporting in NR means that the UE measures layer 1 reference signal receiving power (L1-RSRP) values of different beams (pairs), selects K transmit beams with the highest L1-RSRP, and reports them to the NW in the form of uplink control information (UCI). Here, the L1-RSRP may also be replaced by other beam link indicators, such as layer 1 signal to interference plus noise ratio (L1-SINR), layer 1 reference signal received quality (L1-RSRQ), or the like.

If any one of the above optimal K transmit beams is used alone, the NW may use it as a downlink transmit beam, and the UE may also find a corresponding receive beam. However, there is no guarantee that when the NW uses 2 or more than 2 transmit beams, the UE can always find corresponding receive beams.

After learning the optimal beam reported by the terminal device, the network device may carry a transmission configuration indicator (TCI) state (a transmit beam using the downlink reference signal as a reference is included therein) through media access control (MAC) or downlink control information (DCI) signaling to complete the beam indication to the UE. The UE uses a receive beam corresponding to this transmit beam for downlink reception.

In NR, a group-based beam reporting mechanism is introduced. The UE measures a downlink reference signal resource set, where the downlink reference signal resource set may include reference signals from only one transmission reception point (TRP), or may include reference signals from two TRPs. Therefore, it may be understood that the group beam reporting does not distinguish between single-TRP and multi-TRP operations. Subsequently, the UE reports a group of downlink transmit beams (two downlink transmit beams), and this reported beam group may be used for downlink reception simultaneously, regardless of whether the UE uses one or two receive beams, which depends on the implementation of the UE. The purpose of simultaneous reception is to support the NW to perform multi-beam (relative to single-beam) transmission to the UE.

In NR multiple input multiple output (MIMO), the group beam reporting mechanism of multi-TRP is enhanced. The NW configures a reference signal resource set for each TRP, so configures a total of 2 reference signal resource sets (corresponding to 2 TRPs). The UE selects 1, 2 or 4 reference signals from one reference signal resource set and selects corresponding 1, 2 or 4 reference signals from another reference signal resource set to form 1, 2 or 4 beam reporting groups, and then reports them to the NW.

In order to better understand the embodiments of the present disclosure, AI/ML-based beam management related to the present disclosure is described.

The AI/ML-based beam management may be a spatial-domain downlink beam prediction.

Spatial-domain beam prediction (also referred to as beam management example 1 (BM-Case 1)): performing a spatial-domain prediction of the downlink beam in a data set A (Set A) by measuring beams in a data set B (Set B). Set B is either a subset of Set A, or Set B and Set A are two different beam sets. Set B may be understood as a partial subset of the beam (pair); and Set A may be understood as a full set of the beam (pair).

FIG. 9 schematically shows an input and output relation of a beam prediction model. It may be considered that this model solves a multi-classification problem, namely, the relation between an input an L1-RSRP of a partial subset (i.e., Set B) and the L1-RSRPs of the optimal K beams, where the partial beam measurement set (i.e., Set B, which is a part of the L1-RSRP measured by the full set Set A) serves as the input of the model. The output is the optimal K beam indexes selected from the full set Set A, that is, the K beams with the highest L1-RSRP. The labels used by the model are the optimal (i.e., with the highest L1-RSRP) K beam indexes measured in the full Set A. Specifically, as illustrated in FIG. 9, the measurement data set B (Set B) includes L1-RSRPs corresponding to T beam indexes, the prediction data set A (Set A) includes S beam indexes, and AI/ML model 1 predicts the optimal K beam indexes (beam index #2 in FIG. 9). It will be noted that the beam in FIG. 9 may also be replaced by a beam pair, the specific description of which is similar to that of the beam and will not be repeated here.

FIG. 10 schematically shows an optimal beam quality prediction model, which may be understood as a linear regression problem. An input and output relation of this model is a relation between an input of an L1-RSRP of a partial subset (i.e., Set B) and the L1-RSRPs of the optimal K beams. The input part is the same as that of the beam prediction model in FIG. 9, but the difference is that the output of this model is optimal K (K>=1) L1-RSRPs. The labels are the optimal K L1-RSRPs measured in the full set (i.e., Set A) and corresponding K beam indexes. Specifically, as illustrated in FIG. 10, the measurement data set B (Set B) includes L1-RSRPs corresponding to T beam indexes, the prediction data set A (Set A) includes L1-RSRPs corresponding to S beam indexes, and AI/ML model 2 predicts optimal K (K>=1) L1-RSRPs. It will be noted that the beam in FIG. 10 may also be replaced by a beam pair, the specific description of which is similar to that of the beam and will not be repeated here.

In order to better understand the embodiments of the present disclosure, the problems solved by the present disclosure are described.

For the NR group beam measurement and reporting process, the NW needs to configure multiple groups of reference signal resource sets for the UE, and the UE completes a large number of beam sweeping processes and reports the sweeping results to the NW, which will generate a large amount of downlink resource overhead, and power and complexity overhead on the UE side.

Therefore, in the subsequent evolution of NR, a study item (SI) for the beam (pair) prediction based on AI/ML models is determined. However, the group-based beam(pair) prediction is not involved.

In light of the above problems, the present disclosure proposes to design an AI/ML-based group beam (pair) selection and reporting mechanism, and gives a corresponding signaling design.

It will be noted that the term "beam (pair)" represents "beam" or "beam pair" literally. Specifically, in the embodiments of the present disclosure, a beam may refer to a transmit beam or a receive beam, and a beam pair refers to a pair of a transmit beam and a receive beam. In addition, spatial filters may be used instead of beams(pairs). For AI/ML models, their output may be understood as inference or prediction. In the present disclosure, inference and prediction have the same meaning and can be interchangeable.

In order to better understand the technical solutions of the embodiments of the present disclosure, the technical solutions of the present disclosure are described in detail below through specific embodiments. The following related technologies may be arbitrarily combined with the technical solutions of the embodiments of the present disclosure as optional solutions, and they all belong to the protection scope of the embodiments of the present disclosure. The embodiments of the present disclosure include at least part of the following contents.

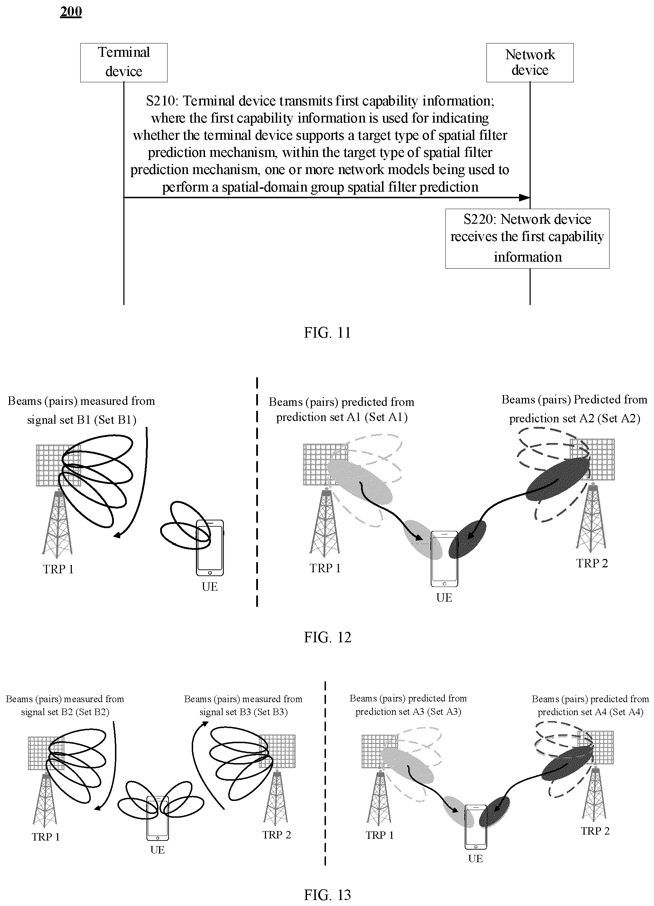

FIG. 11 is a schematic flow chart of a wireless communication method 200 in accordance with the embodiments of the present disclosure. As illustrated in FIG. 11, the wireless communication method 200 may include at least part of the following contents.

In S210, a terminal device transmits first capability information; where the first capability information is used for indicating whether the terminal device supports a target type of spatial filter prediction mechanism, and within the target type of spatial filter prediction mechanism, one or more network models are used to perform a spatial-domain group spatial filter prediction.

In S220, a network device receives the first capability information.

In the embodiments of the present disclosure, the terminal device may indicate whether the terminal device supports the target type of spatial filter prediction mechanism through the first capability information; and within the target type of spatial filter prediction mechanism, the spatial-domain group spatial filter prediction may be implemented based on one or more network models, thereby improving the performance of the beam management system.

The "network model" described in the embodiments of the present disclosure is an AI/ML model. Optionally, within the target type of spatial filter prediction mechanism, the network model may be an AI/ML model for a spatial-domain beam prediction, the specific implementation of which may be as illustrated in FIG. 9 or FIG. 10.

In some embodiments of the present disclosure, a spatial filter may also be referred to as a beam, a beam pair, a spatial relation, a spatial setting, a spatial-domain filter, or a reference signal.

In some embodiments, the spatial filter includes a transmitting spatial filter. Optionally, the transmitting spatial filter may also be referred to as a transmit beam (Tx beam) or a transmitting-end spatial-domain filter. The above terms may be interchangeable.

In some embodiments, the spatial filter includes a receiving spatial filter. Optionally, the receiving spatial filter may also be referred to as a receive beam (Rx beam) or a receiving-end spatial-domain filter. The above terms may be interchangeable.

In some embodiments, the spatial filters include a transmitting spatial filter and a receiving spatial filter. Optionally, a combination of the transmitting spatial filter and the receiving spatial filter may also be referred to as a beam pair (i.e., a pair of a transmit beam (Tx beam) and a receive beam (Rx beam)), a spatial filter pair, or a spatial filter group. The above terms may be interchangeable.

In some embodiments, identification information of the spatial filter may be an index or an identification of the spatial filter.

For example, the identification information of the transmitting spatial filter may be an index or an identification of the transmitting spatial filter.

For another example, the identification information of the receiving spatial filter may be an index or an identification of the receiving spatial filter.

For yet another example, the identification information of the combination of the transmitting spatial filter and the receiving spatial filter may be a combination index.

In some embodiments, the first capability information may be carried by one of the following:
a radio resource control (RRC) signaling, uplink control information (UCI), or a media access control control element (MAC CE) signaling.

In some embodiments, the target type of spatial filter prediction mechanism is a first type of spatial filter prediction mechanism, or the target type of spatial filter prediction mechanism is a second type of spatial filter prediction mechanism.

In some embodiments, within the first type of spatial filter prediction mechanism, an input of the network model(s) includes at least one of the following: identification information of spatial filters measured based on a first reference signal set, or link quality information corresponding to the spatial filters measured based on the first reference signal set; and an output of the network model(s) includes at least one of the following: identification information groups of K spatial filters, or link quality information groups corresponding to the K spatial filters;
where the identification information groups of the K spatial filters are composed of identification information of K₁ spatial filters predicted in a first prediction data set and identification information of K₂ spatial filters predicted in a second prediction data set, and the link quality information groups corresponding to the K spatial filters are composed of link quality information corresponding to the K₁ spatial filters predicted in the first prediction data set and link quality information corresponding to the K₂ spatial filters predicted in the second prediction data set, K, K₁ and K₂ being all positive integers.

It will be noted that an identification information group of each spatial filter among the identification information groups of the K spatial filters includes identification information of one spatial filter among the identification information of the K₁ spatial filters and identification information of one spatial filter among the identification information of the K₂ spatial filters.

Optionally, a signal transmitted on a spatial filter corresponding to identification information of the spatial filter included in the identification information group of each spatial filter among the identification information groups of the K spatial filters may be received by the terminal device simultaneously.

In some embodiments, within the first type of spatial filter prediction mechanism, K ≤ K₁×K₂.

In some embodiments, within the first type of spatial filter prediction mechanism, the first prediction data set and the second prediction data set correspond to different base stations or transmission reception points (TRPs).

In some embodiments, in order to reduce the overhead of beam (pair) measurement, the number of reference signal resources included in the first reference signal set is less than the number of beams (pairs) included in the first prediction data set, and/or the number of reference signal resources included in the first reference signal set is less than the number of beams (pairs) included in the second prediction data set.

In some embodiments, within the first type of spatial filter prediction mechanism, the first reference signal set and the first prediction data set correspond to a same base station or TRP, and the first reference signal set and the second prediction data set correspond to different base stations or TRPs.

In some embodiments, the first reference signal set includes at least one of the following reference signals:
a synchronization signal block (SSB), or a channel state information reference signal (CSI-RS).

In some embodiments, within the first type of spatial filter prediction mechanism, the spatial filters measured based on the first reference signal set are the same as spatial filters in the first prediction data set, or the spatial filters measured based on the first reference signal set are a subset of the spatial filters in the first prediction data set, or each of the spatial filters measured based on the first reference signal set meets a spatial-domain Quasi-Co-Located (QCL) relation with multiple ones of the spatial filters in the first prediction data set.

As a specific example, in order to reduce the overhead of spatial filter (such as beam (pair)) prediction, the spatial filters (such as beams (pairs)) measured based on the first reference signal set are the same as the spatial filters (such as beams (pairs)) in the first prediction data set. Then the main function of the network model is to infer, from the spatial filters (such as beams (pairs)) in the second prediction data set, the identification information groups of the K spatial filters and/or the link quality information groups corresponding to the K spatial filters composed of the spatial filters (such as beams (pairs)) (all measured) in the first prediction data set.

As a specific example, the spatial filters (such as beams (pairs)) measured based on the first reference signal set are different from the spatial filters (such as beams (pairs)) in the first prediction data set. For example, the beams (pairs) (including narrow beams (pairs)) measured based on the first reference signal set may be used as a subset of the beams (pairs) (including narrow beams (pairs)) in the first prediction data set to reduce the overhead of beam measurement; or the beams (pairs) (including wide beams (pairs)) measured based on the first reference signal set and the beams (pairs) (including narrow beams (pairs)) in the first prediction data set have a one-to-many spatial-domain Quasi-Co-Located relation, that is, a single wide beam SSB may include multiple narrow beams CSI-RS in space. Then the main function of the network model is to infer the optimal K₁ beams (pairs) in the first prediction data set and the optimal K₂ beams (pairs) in the second prediction data set by measuring the first reference signal set. The K₁ beams (pairs) and the K₂ beams (pairs) together constitute the optimal K beam (pair) groups.

In some embodiments, the first prediction data set may be represented by a data set A1 (Set A1), the second prediction data set may be represented by a data set A2 (Set A2), and the first reference signal set may be represented by a data set B1 (Set B1). Specifically, as illustrated in FIG. 12, within the first type of spatial filter prediction mechanism, the first reference signal set (Set B1) is measured, and the measurement result of the first reference signal set is input into the network model; and the network model predicts K₁ spatial filters (such as beams (pairs)) from the first prediction data set (Set A1), and predicts K₂ spatial filters (such as beams (pairs)) from the second prediction data set (Set A2). The identification information of the K₁ spatial filters (such as beams (pairs)) and the identification information of the K₂ spatial filters (such as beams (pairs)) constitute the identification information groups of the K spatial filters (such as beams (pairs)), and the terminal device may receive any group of spatial filters (such as beams (pairs)) simultaneously.

In order to reduce the overhead of beam (pair) measurement, in this embodiment, the number of reference signal resources included in the measurement set is less than the number of beams (pairs) included in the prediction set. For example, Set B1 (including narrow beams (pairs)) may be a subset of Set A1 (including narrow beams (pairs)); or Set B1 (including wide beams (pairs)) and Set A1 (including narrow beams (pairs)) have a one-to-many spatial-domain Quasi-Co-Located relation.

In some embodiments, within the first type of spatial filter prediction mechanism, an identification information group of an optimal spatial filter among the identification information groups of the K spatial filters is a combination of a first spatial filter and a second spatial filter; where the first spatial filter is a spatial filter with the highest link quality information corresponding thereto among the K₁ spatial filters, and the second spatial filter is a spatial filter with the highest link quality information among spatial filters that are allowed to be received by the terminal device simultaneously with the first spatial filter among the K₂ spatial filters; or the first spatial filter is a spatial filter with the highest link quality information among spatial filters that are allowed to be received by the terminal device simultaneously among the K₁ spatial filters, and the second spatial filter is a spatial filter with the highest link quality information among spatial filters that are allowed to be received by the terminal device simultaneously among the K₂ spatial filters.

Here are the selection criteria for the optimal group. For example, a beam (pair) with the highest L1-RSRP in Set A1 is selected first, noted as Beam (pair) index #A1, and then a beam (pair) with the highest L1-RSRP from beams (pairs) in Set A2 that are capable of being received by the UE simultaneously as the selected beam (pair) is selected. For another example, among combinations of beams (pairs) in Set A1 and Set A2 that are capable of being simultaneously received by the UE, a group of beams (pairs) corresponding to the L1-RSRP with the highest average is selected.

In some embodiments, within the second type of spatial filter prediction mechanism, an input of the network model(s) includes at least one of the following: identification information of spatial filters measured based on a second reference signal set and a third reference signal set, or link quality information corresponding to the spatial filters measured based on the second reference signal set and the third reference signal set; and an output of the network model(s) includes at least one of the following: identification information groups of P spatial filters, or link quality information groups corresponding to the P spatial filters;
where the identification information groups of the P spatial filters are composed of identification information of P₁ spatial filters predicted in a third prediction data set and identification information of P₂ spatial filters predicted in a fourth prediction data set, and the link quality information groups corresponding to the P spatial filters are composed of link quality information corresponding to the P₁ spatial filters predicted in the third prediction data set and link quality information corresponding to the P₂ spatial filters predicted in the fourth prediction data set, P, P₁ and P₂ being all positive integers.

It will be noted that an identification information group of each spatial filter among the identification information groups of the P spatial filters includes identification information of one spatial filter among the identification information of the P₁ spatial filters and identification information of one spatial filter among the identification information of the P₂ spatial filters.

Optionally, a signal transmitted on a spatial filter corresponding to identification information of the spatial filter included in the identification information group of each spatial filter among the identification information groups of the P spatial filters may be received by the terminal device simultaneously.

In some embodiments, within the second type of spatial filter prediction mechanism, P= P₁×P₂.

In some embodiments, in order to reduce the overhead of beam (pair) measurement, the number of reference signal resources included in the second reference signal set is less than the number of beams (pairs) included in the third prediction data set, and/or the number of reference signal resources included in the third reference signal set is less than the number of beams (pairs) included in the fourth prediction data set.

In some embodiments, within the second type of spatial filter prediction mechanism, the third prediction data set and the fourth prediction data set correspond to different base stations or TRPs.

In some embodiments, within the second type of spatial filter prediction mechanism, the second reference signal set and the third prediction data set correspond to a same base station or TRP, and the third reference signal set and the fourth prediction data set correspond to a same base station or TRP.

In some embodiments, the second reference signal set includes at least one of the following reference signals: an SSB, or a CSI-RS; and/or the third reference signal set includes at least one of the following reference signals: an SSB, or a CSI-RS.

In some embodiments, within the second type of spatial filter prediction mechanism, the spatial filters measured based on the second reference signal set are the same as spatial filters in the third prediction data set, or the spatial filters measured based on the third reference signal set are the same as spatial filters in the fourth prediction data set, or the spatial filters measured based on the second reference signal set are a subset of the spatial filters in the third prediction data set, or the spatial filters measured based on the third reference signal set are a subset of the spatial filters in the fourth prediction data set, or each of the spatial filters measured based on the second reference signal set meets a spatial-domain QCL relation with multiple ones of the spatial filters in the third prediction data set, or each of the spatial filters measured based on the third reference signal set meets a spatial-domain QCL relation with multiple ones of the spatial filters in the fourth prediction data set.

As a specific example, in order to reduce the overhead of spatial filter (such as beam (pair)) prediction, the spatial filters (such as beams (pairs)) measured based on the second reference signal set are the same as the spatial filters (such as beams (pairs)) in the third prediction data set. Then the main function of the network model is to infer the identification information groups of the K spatial filters and/or the link quality information groups corresponding to the K spatial filters composed of the spatial filters (such as beams (pairs)) (all measured) in the third prediction data set from the spatial filters (such as beams (pairs)) in the fourth prediction data set.

As another specific example, in order to reduce the overhead of spatial filter (such as beam (pair)) prediction, the spatial filters (such as beams (pairs)) measured based on the third reference signal set are the same as the spatial filters (such as beams (pairs)) in the fourth prediction data set. Then the main function of the network model is to infer the identification information groups of the K spatial filters and/or the link quality information groups corresponding to the K spatial filters composed of the spatial filters (such as beams (pairs)) (all measured) in the fourth prediction data set from the spatial filters (such as beams (pairs)) in the third prediction data set.

As a specific example, the spatial filters (such as beams (pairs)) (including narrow beams (pairs)) measured based on the second reference signal set are a subset of the spatial filters (such as beams (pairs)) (including narrow beams (pairs)) in the third prediction data set, or the spatial filters (such as beams (pairs)) (including narrow beams (pairs)) measured based on the third reference signal set are a subset of the spatial filters (such as beams (pairs)) (including narrow beams (pairs)) in the fourth prediction data set, thereby reducing the overhead of beam measurement.

As a specific example, the beams (pairs) (including wide beams (pairs)) measured based on the second reference signal set and the beams (pairs) (including narrow beams (pairs)) in the third prediction data set have a one-to-many spatial-domain Quasi-Co-Located relation, that is, a single wide beam SSB may include multiple narrow beams CSI-RS in space; and the beams (pairs) (including wide beams (pairs)) measured based on the third reference signal set and the beams (pairs) (including narrow beams (pairs)) in the fourth prediction data set have a one-to-many spatial-domain Quasi-Co-Located relation, that is, a single wide beam SSB may include multiple narrow beams CSI-RS in space. Then the main function of the network model is to infer the optimal P₁ beams (pairs) in the third prediction data set and the optimal P₂ beams (pairs) in the fourth prediction data set by measuring the second reference signal set and the third reference signal set. The P₁ beams (pairs) and the P₂ beams (pairs) together constitute the optimal P beam (pair) groups.

In some embodiments, the third prediction data set may be represented by a data set A3 (Set A3), the fourth prediction data set may be represented by a data set A4 (Set A4), the second reference signal set may be represented by a data set B2 (Set B2), and the third reference signal set may be represented by a data set B3 (Set B3). Specifically, as illustrated in FIG. 13, within the second type of spatial filter prediction mechanism, the second reference signal set (Set B2) and the third reference signal set (Set B3) are measured, and the measurement result of the second reference signal set and the measurement result of the third reference signal set are input into the network model, and the network model predicts P₁ spatial filters (such as beams (pairs)) from the third prediction data set (Set A3), and predicts P₂ spatial filters (such as beams (pairs)) from the fourth prediction data set (Set A4). The identification information of P₁ spatial filters (such as beams (pairs)) and the identification information of P₂ spatial filters (such as beams (pairs)) constitute the identification information groups of the P spatial filters (such as beams (pairs)), and the terminal device may receive any group of spatial filters (such as beams (pairs)) simultaneously.

In order to reduce the overhead of beam (pair) measurement, in this embodiment, the number of reference signal resources included in the measurement set is less than the number of beams (pairs) included in the prediction set. For example, Set B2 (including narrow beams (pairs)) may be a subset of Set A3 (including narrow beams (pairs)); or Set B2 (including wide beams (pairs)) and Set A3 (including narrow beams (pairs)) have a one-to-many spatial-domain Quasi-Co-Located relation. For another example, Set B3 (including narrow beams (pairs)) may be a subset of Set A4 (including narrow beams (pairs)); or Set B3 (including wide beams (pairs)) and Set A4 (including narrow beams (pairs)) have a one-to-many spatial-domain Quasi-Co-Located relation.

In some embodiments, within the second type of spatial filter prediction mechanism, an identification information group of an optimal spatial filter among the identification information groups of the P spatial filters is a combination of a third spatial filter and a fourth spatial filter; where the third spatial filter is a spatial filter with the highest link quality information corresponding thereto among the P₁ spatial filters, and the fourth spatial filter is a spatial filter with the highest link quality information among spatial filters that are allowed to be received by the terminal device simultaneously with the third spatial filter among the P₂ spatial filters; or the third spatial filter is a spatial filter with the highest link quality information among spatial filters that are allowed to be received by the terminal device simultaneously among the P₁ spatial filters, and the fourth spatial filter is a spatial filter with the highest link quality information among spatial filters that are allowed to be received by the terminal device simultaneously among the P₂ spatial filters.

Here are the selection criteria for the optimal group. For example, a beam (pair) with the highest L1-RSRP in Set A3 is selected first, noted as Beam (pair) index #A3, and then a beam (pair) with the highest L1-RSRP from beams (pairs) in Set A4 that are capable of being received by the UE simultaneously as the selected beam (pair) is selected. For another example, among beam (pair) combinations that are capable of being simultaneously received by the UE in Set A3 and Set A4, a group of beams (pairs) corresponding to the L1-RSRP with the highest average is selected.

In some embodiments, the link quality information may include, but is not limited to, at least one of the following:
a layer 1 reference signal receiving power (L1-RSRP), a layer 1 reference signal receiving quality (L1-RSRQ), or a layer 1 signal to interference plus noise ratio (L1-SINR).

In some embodiments, in a case where the target type of spatial filter prediction mechanism is the first type of spatial filter prediction mechanism and the terminal device performs a spatial filter prediction, the first capability information further includes at least one of the following:
a maximum number of reference signal resources included in the first reference signal set and supported by the terminal device;
a maximum number of spatial filters included in the first prediction data set and supported by the terminal device;
a maximum number of spatial filters included in the second prediction data set and supported by the terminal device;
a maximum value of K supported by the terminal device;
a number of receiving spatial filters of the terminal device; or
a number of receiving antenna panels of the terminal device.

Specifically, the terminal device informs the network device through a terminal capability report whether the terminal device supports the first type of spatial filter prediction mechanism. If the first type of spatial filter prediction mechanism is supported, that is, the inferring of group beams (pairs) of two prediction sets from one measurement set is supported, the terminal capabilities that should further be reported include but are not limited to:
a maximum number of SSB resources and/or CSI-RS resources that the terminal device is able to measure in the first reference signal set, i.e., a maximum size of the first reference signal set (Set B1);
a maximum number of beams (pairs) that the terminal device is able to predict in each prediction data set, i.e., a maximum size of the first prediction data set (Set A1) and a maximum size of the second prediction data set (Set A2);
a maximum number of beam (pair) groups that the terminal device is able to predict, i.e., Kmax;
a number of receive beams that the terminal device explicitly or implicitly reports in beam (pair) measurement and prediction; or
a number of its receiving antenna panels that the terminal device reports (Optional).

Optionally, for an explicit report, the terminal device directly reports a number of receive beams of each of its antenna panels.

Optionally, for an implicit report, the terminal device reports a maximum number of resources for CSI-RS repetition transmission (CSI-RS resource set with repetition ON) used for beam sweeping.

In some embodiments, the terminal device receives first information.

Optionally, the first information is used for configuring at least one of the following: the first reference signal set, the first prediction data set, or the second prediction data set. For example, the first information is carried through an RRC signaling.

Optionally, the first information is used for activating at least one of the following: one first reference signal set among a pre-configured plurality of first reference signal sets, one first prediction data set among a pre-configured plurality of first prediction data sets, or one second prediction data set among a pre-configured plurality of second prediction data sets. For example, the first information is carried by MAC CE.

Specifically, the network device configures and/or activates a first reference signal set (Set B1) associated with the network model input for the terminal device.

The network device uses an RRC signaling to configure one or multiple groups of Set B1 for the terminal device, i.e., CSI-RS resources and/or SSB resources required for downlink measurement. If the network device is configured with multiple groups of Set B1, the network device further needs to use a MAC CE signaling to activate one group of Set B1 in multiple groups of configurations according to the actual deployment situation and antenna configuration situation; otherwise, the network device only uses one configured group of Set B1.

Specifically, the network device configures and/or activates a first prediction data set (Set A1) and a second prediction data set (Set A2) associated with the network model output for the terminal device.

The network device uses an RRC signaling to configure beam (pair) prediction sets of one or multiple groups of Set A1 and one or multiple groups of Set A2 for the terminal device. If the network device is configured with multiple groups of Set A1 and Set A2, the network device further needs to use a MAC CE signaling to activate one group of Set A1 and one group of Set A2 in multiple groups of configurations according to actual deployment conditions and antenna configuration conditions; otherwise, the network device only uses one configured group of Set A1 and one configured group of Set A2.

In some embodiments, the terminal device inputs the first measurement data set into a first network model, and outputs the identification information groups of the K spatial filters and/or the link quality information groups corresponding to the K spatial filters;
where the first network model is a network model that meets the first type of spatial filter prediction mechanism; and
where the first measurement data set includes at least one of the following: identification information of the spatial filters measured based on the first reference signal set, or link quality information corresponding to the spatial filters measured based on the first reference signal set.

In some embodiments, the first network model is configured or indicated by a network device, or the first network model is determined by the terminal device. For example, the network device configures or indicates the first network model through RRC and/or MAC CE.

As a specific example, if the terminal device supports the first type of spatial filter prediction mechanism and the network model used for prediction is a cell-specific model, the network device will transmit the network model adapted to the network device deployment environment and beam (pair) configuration to the terminal device. For example, the network device indicates a dedicated model ID (the identity (ID) defined in the lifecycle management of the model to identify different models) to the terminal device through RRC and/or MAC CE. Alternatively, the terminal device initiates a network model pre-prepared by itself, and may optionally inform the network device of information about the model, e.g., through a model ID. When the model ID is used in the model communication process, one of the most important assumptions is that the network device and the terminal device have a clear consensus and understanding of the model details expressed by the model ID.

In some embodiments, the terminal device inputs the first measurement data set into a second network model, and outputs the identification information groups of the K spatial filters; and the terminal device inputs the first measurement data set into a third network model, and outputs the link quality information groups corresponding to the K spatial filters;
where the second network model and the third network model are network models that meet the first type of spatial filter prediction mechanism; and the first measurement data set includes at least one of the following: identification information of the spatial filters measured based on the first reference signal set, or link quality information corresponding to the spatial filters measured based on the first reference signal set.

In some embodiments, the second network model is configured or indicated by the network device, or the second network model is determined by the terminal device; and/or the third network model is configured or indicated by the network device, or the third network model is determined by the terminal device. For example, the network device configures or indicates the second network model and/or the third network model through RRC and/or MAC CE.

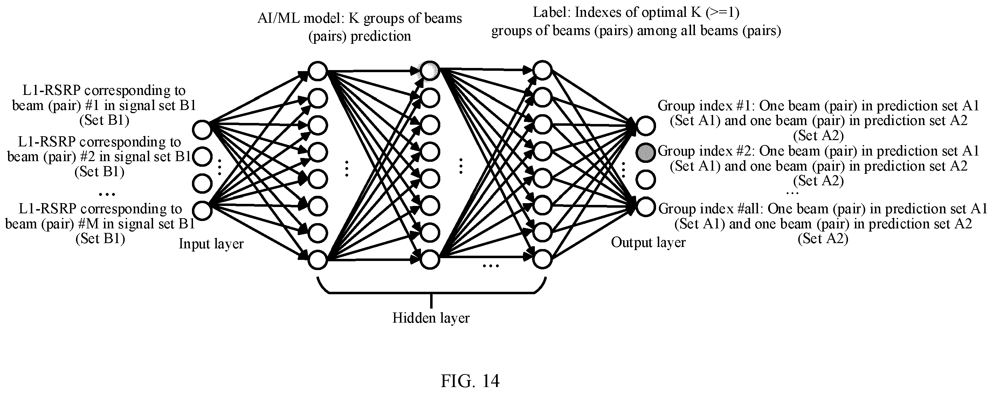

Specifically, the terminal device measures downlink reference signal resources in the first reference signal set (Set B1), and uses corresponding beam (pair) indexes and/or L1-RSRPs of the beams (pairs) as an input of the model. As illustrated in FIG. 14, L1-RSRPs (according to the measurement resource order of Set B1) are used as the input of the model. The output of the model is a combination of K groups (pairs) of beams. The output range of the model is all combinations of the beams (pairs) of the first prediction data set (Set A1) and the beams (pairs) of the second prediction data set (Set A2). The size of Set A1 is K₁, the size of Set A2 is K₂, then the total number of the combinations is K, where K = K₁ * K₂. For the K groups of beams (pairs) output by the model, the example in FIG. 14 is a case where K = 1, that is, the model infers one optimal group of beams (pairs), which includes one beam (pair) in Set A1 and one beam (pair) in Set A2.

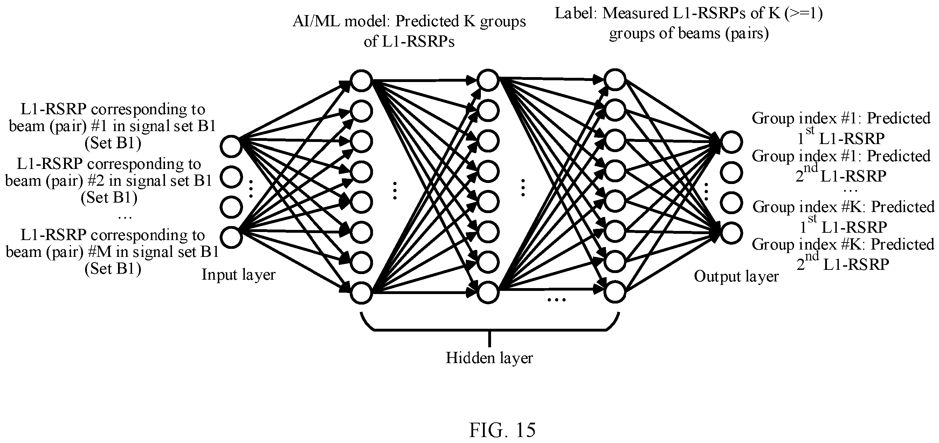

Optionally, in addition to the K groups of beams (pairs) output by the model illustrated in FIG. 14 above, the terminal side may further deploy a matching model to output the L1-RSRP values corresponding to the K groups of beams (pairs). As illustrated in FIG. 15, another model can infer the L1-RSRPs of the K groups of beams (pairs).

In some embodiments, the terminal device transmits first prediction information; where the first prediction information includes at least one of the following: the identification information groups of the K spatial filters, or the link quality information groups corresponding to the K spatial filters. Optionally, link quality information in the link quality information groups corresponding to the K spatial filters is represented in a differential manner.

Specifically, the terminal device transmits the first prediction information to the network device.

As a specific example, the terminal device may report the prediction result according to a group beam reporting format. It is assumed that K = 4, that is, the terminal device reports K beam identification groups, as illustrated in Table 1.

**Table 1**

| **CSI Report Serial Number** | **CSI Field** |
|---|---|
| **CSI Report #n** | Beam Identification Group |
| | Beam #1 in the first beam identification group, if reported |
| | Beam #2 in the first beam identification group, if reported |
| | Beam #1 in the second beam identification group, if reported |
| | Beam #2 in the second beam identification group, if reported |
| | Beam #1 in the third beam identification group, if reported |
| | Beam #2 in the third beam identification group, if reported |
| | Beam #1 in the fourth beam identification group, if reported |
| | Beam #2 in the fourth beam identification group, if reported |
| | RSRP of beam #1 in the first beam identification group |
| | Differential RSRP of beam #2 in the first beam identification group |
| | Differential RSRP of beam #1 in the second beam identification group, if reported |
| | Differential RSRP of beam #2 in the second beam identification group, if reported |
| | Differential RSRP of beam #1 in the third beam identification group, if reported |
| | Differential RSRP of beam #2 in the third beam identification group, if reported |
| | Differential RSRP of beam #1 in the fourth beam identification group, if reported |
| | Differential RSRP of beam #2 in the fourth beam identification group, if reported |

It will be noted that in the above Table 1, the differential RSRP of beam #2 in the first beam identification group may be a difference relative to the RSRP of beam #1 in the first beam identification group, the differential RSRP of beam #1 in the second beam identification group may be a difference relative to the RSRP of beam #1 in the first beam identification group, the differential RSRP of beam #2 in the second beam identification group may be a difference relative to the RSRP of beam #1 in the first beam identification group, the differential RSRP of beam #1 in the third beam identification group may be a difference relative to the RSRP of beam #1 in the first beam identification group, the differential RSRP of beam #2 in the third beam identification group may be a difference relative to the RSRP of beam #1 in the first beam identification group, the differential RSRP of beam #1 in the fourth beam identification group may be a difference relative to the RSRP of beam #1 in the first beam identification group, and the differential RSRP of beam #2 in the fourth beam identification group may be a difference relative to the RSRP of beam #1 in the first beam identification group.

In some embodiments, the terminal device may report the prediction result according to a group beam pair reporting format. It is assumed that K=4, that is, the terminal device reports K beam pair identification groups, as illustrated in Table 2.

**Table 2**

| **CSI Report Serial Number** | **CSI Field** |
|---|---|
| CSI Report #n | Beam Pair Identification Group |
| | Beam pair #1 in the first beam pair identification group, if reported |
| | Beam pair #2 in the first beam pair identification group, if reported |
| | Beam pair #1 in the second beam pair identification group, if reported |
| | Beam pair #2 in the second beam pair identification group, if reported |
| | Beam pair #1 in the third beam pair identification group, if reported |
| | Beam pair #2 in the third beam pair identification group, if reported |
| | Beam pair #1 in the fourth beam pair identification group, if reported |
| | Beam pair #2 in the fourth beam pair identification group, if reported |
| | RSRP of beam pair #1 in the first beam pair identification group, if reported |
| | Differential RSRP of beam pair #2 in the first beam pair identification group, if reported |
| | Differential RSRP of beam pair #1 in the second beam pair identification group, if reported |
| | Differential RSRP of beam pair #2 in the second beam pair identification group, if reported |
| | Differential RSRP of beam pair #1 in the third beam pair identification group, if reported |
| | Differential RSRP of beam pair #2 in the third beam pair identification group, if reported |
| | Differential RSRP of beam pair #1 in the fourth beam pair identification group, if reported |
| | Differential RSRP of beam pair #2 in the fourth beam pair identification group, if reported |

It will be noted that in the above Table 2, the differential RSRP of beam pair #2 in the first beam pair identification group may be a difference relative to the RSRP of beam pair #1 in the first beam pair identification group, the differential RSRP of beam pair #1 in the second beam pair identification group may be a difference relative to the RSRP of beam pair #1 in the first beam pair identification group, the differential RSRP of beam pair #2 in the second beam pair identification group may be a difference relative to the RSRP of beam pair #1 in the first beam pair identification group, the differential RSRP of beam pair #1 in the third beam pair identification group may be a difference relative to the RSRP of beam pair #1 in the first beam pair identification group, the differential RSRP of beam pair #2 in the third beam pair identification group may be a difference relative to the RSRP of beam pair #1 in the first beam pair identification group, the differential RSRP of beam pair #1 in the fourth beam pair identification group may be a difference relative to the RSRP of beam pair #1 in the first beam pair identification group, and the differential RSRP of beam pair #2 in the fourth beam pair identification group may be a difference relative to the RSRP of beam pair #1 in the first beam pair identification group.

In some embodiments, the terminal device receives first indication information; where the first indication information is used for indicating a predicted identification information group of a spatial filter used in the identification information groups of the K spatial filters.

Specifically, after receiving the first prediction information transmitted by the terminal device, the network device may transmit the first indication information based on the first prediction information, i.e., indicate a predicted identification information group of a spatial filter used in the identification information groups of the K spatial filters.

In some embodiments, the first indication information may be carried by one of the following:
downlink control information (DCI), or MAC CE.

In some embodiments, the first indication information is at least one TCI state indication.

Specifically, within the first type of spatial filter prediction mechanism, regardless of whether the network model infers a transmit beam or a beam pair, the TCI state indication method may be used, and the network device may use MAC CE and/or DCI to indicate a maximum of 2 TCI states. After receiving the indication of the TCI state, the terminal device uses a corresponding receive beam for reception. If the network model infers a beam pair, the network device may also refer to the reporting of beam pair information for a beam pair information indication to the terminal device, where this indication includes at least 2 beam pair indexes. The network device transmits a downlink channel and a signal according to a transmit beam in the beam pair information, and the terminal device receives the downlink channel and the signal by finding a corresponding receive beam according to a receive beam index in the beam pair information.

In some embodiments, in a case where the target type of spatial filter prediction mechanism is the first type of spatial filter prediction mechanism and the terminal device does not perform a spatial filter prediction, the first capability information further includes at least one of the following:
a maximum number of reference signal resources included in the first reference signal set and supported by the terminal device;
a maximum number of pieces of identification information of spatial filters supporting reporting and/or a maximum number of pieces of link quality information corresponding to the spatial filters in one measurement result report of the terminal device;
a number of receiving spatial filters of the terminal device; or
a number of receiving antenna panels of the terminal device.

Specifically, since the network model is not deployed on the terminal side, the terminal device only needs to inform the network device of the corresponding beam measurement and reporting capabilities. The terminal device informs the network device through the terminal capability report whether the terminal device supports the first type of spatial filter prediction mechanism. If the first type of spatial filter prediction mechanism is supported, that is, the inferring of group beams (pairs) of two prediction sets from one measurement set is supported, the terminal capabilities that should further be reported include but are not limited to:
a maximum number of SSB resources and/or CSI-RS resources that the terminal device is able to measure in the first reference signal set, i.e., a maximum size of the first reference signal set (Set B1);
a maximum number of indexes of beams (pairs) and link qualities thereof (such as L1-RSRPs) that the terminal device is able to report in one report of beam (pair) measurement results;
a number of receive beams that the terminal device explicitly or implicitly reports in beam (pair) measurement and prediction; or
a number of its receiving antenna panels that the terminal device reports (Optional).

Optionally, for an explicit report, the terminal device directly reports a number of receive beams of each of its antenna panels.

Optionally, for an implicit report, the terminal device reports a maximum number of resources for CSI-RS repetition transmission (CSI-RS resource set with repetition ON) used for beam sweeping.

In some embodiments, the network model is deployed on the network side and is generally a cell-specific model, and the terminal does not need to transmit the model to the network device. The network device may use a private model, and there is no need to transmit the model between the network device and the terminal device.

In some embodiments, the terminal device receives second information;
where the second information is used for configuring the first reference signal set, or the second information is used for activating one first reference signal set from a pre-configured plurality of first reference signal sets.

Specifically, the network device configures and/or activates a first reference signal set (Set B1) associated with the network model input for the terminal device.

The network device uses an RRC signaling to configure one or multiple groups of Set B1 for the terminal device, i.e., CSI-RS resources and/or SSB resources required for downlink measurement. If the network device is configured with multiple groups of Set B1, the network device further needs to use a MAC CE signaling to activate one group of Set B1 in multiple groups of configurations according to the actual deployment situation and antenna configuration situation; otherwise, the network device only uses one configured group of Set B1.

It will be noted that since the network model is deployed on the network side, the terminal device does not need to know the situation of the first prediction data set (Set A1) and the second prediction data set (Set A2).

In some embodiments, the terminal device transmits a measurement result of the first reference signal set;
where the measurement result of the first reference signal set includes at least one of the following: identification information of the spatial filters measured based on the first reference signal set, or link quality information corresponding to the spatial filters measured based on the first reference signal set.

In some embodiments, the link quality information corresponding to the spatial filters measured based on the first reference signal set is represented in a differential manner.

Specifically, the terminal device measures reference signal measurement resources corresponding to all beams (pairs) of the first reference signal set (Set B1). The terminal device may report the measurement result of Set B1 in the following two ways.

In the first method, the terminal device only reports the link qualities of the beams (pairs) in Set B1 in a specific order, such as L1-RSRPs, as illustrated in Table 3. Since Set B1 is configured by the NW, the NW should also know the order in which the beams (pairs) are reported. For example, SSB resources and/or CSI-RS resources may be measured based on Set B1. The order may be from small to large according to the resource indexes, first reporting the link quality of SSB resources (if any, that is, SSB resource indicator (SSBRI)), and then reporting the link quality of CSI-RS resources (if any, that is, CSI-RS resource indicator (CRI)). If an index of a reference signal resource is repeated (for example, a transmit beam of SSB #1 corresponds to two receive beams, forming two different beam pairs), then the beam pairs are ordered from small to large, or the receive beam indexes are ordered from small to large. Compared with traditional beam reporting, the first method may reduce unnecessary overhead by finding the strongest N transmit beam indexes and reporting these indexes.

**Table 3**

| **CSI Report Serial Number** | **CSI Field** |
|---|---|
| CSI Report #n | RSRP of SSBRI#1 in Set B1, or RSRP of CRI#1 in Set B1, or RSRP of beam pair #1 in Set B1 |
| | RSRP of SSBRI#2 in Set B1, or RSRP of CRI#2 in Set B1, or RSRP of beam pair #2 in Set B1 |
| | ... |
| | RSRP of SSBRI# Size in Set B1, or RSRP of CRI# Size in Set B1, or RSRP of beam pair# Size in Set B1 |

In addition, in order to further reduce the overhead, the differential reporting of Set B1 may be considered, as illustrated in Table 4. The UE reports SSBRI/CRI of a beam (pair) with the highest L1-RSRP, then reports this index, and then the differential values of other beams (pairs) relative to the highest value.

**Table 4**

| **CSI Report Serial Number** | **CSI Field** |
|---|---|
| CSI Report #n | Highest RSRP value of SSBRI in Set B1, or highest RSRP value of CRI in Set B1, or highest RSRP value of a beam pair in Set B1 |
| | SSBRI with highest RSRP in Set B1, or CRI with highest RSRP in Set B1, or beam pair with highest RSRP in Set B1 |
| | Differential RSRP of SSBRI#1 in Set B1, or differential RSRP of CRI#1 in Set B1, or differential RSRP of beam pair #1 in Set B1 |
| | Differential RSRP of SSBRI#2 in Set B1, or differential RSRP of CRI#2 in Set B1, or differential RSRP of beam pair #2 in Set B1 |
| | ... |
| | Differential RSRP of SSBRI# Size in Set B1, or differential RSRP of CRI# Size in Set B1, or differential RSRP of beam pair# Size in Set B1 |

In the second method, the terminal device reports the beam (pair) index of the first reference signal set (Set B1) and the corresponding link quality, such as L1-RSRP. In this way, regardless of whether Set B1 is selected in advance or in a random selection mode, the network device may understand which beams (pairs) correspond to what the terminal device reports. Specifically, each beam report may only report a maximum of 4 transmit beams. For the measurement and reporting of Set B1 (whose size is often much larger than 4), it is necessary to enhance the load capacity of beam (pair) reporting, such as carrying the measurement of a maximum of 4, 8, 16 beams (pairs) each time, or even more. Alternatively, a cascade reporting method is adopted, as illustrated in Table 5, in which different pieces of beam (pair) information in Set B1 are reported in multiple times. For example, the beam (pair) indexes 0 to 3 of Set B1 and L1-RSRPs corresponding thereto are reported first, the beam (pair) indexes 4 to 7 of Set B1 and L1-RSRPs corresponding thereto are reported second, and the beam (pair) indexes of Set B1 (Size(Set B1) - 4 to Size(Set B1) - 1) are reported last. In order to save overhead, the highest L1-RSRP may be selected as a benchmark, and other L1-RSRPs may be reported in a differential manner.

**Table 5**

| **CSI Report Serial Number** | **CSI Field** |
|---|---|
| CSI Report #n Part #1 | CRI #1, or SSBRI #1, or beam pair #1, if reported |
| | CRI #2, or SSBRI #2, or beam pair #2, if reported |
| | CRI #3, or SSBRI #3, or beam pair #3, if reported |
| | CRI #4, or SSBRI #4, or beam pair #4, if reported |
| | RSRP #1, if reported |
| | Differential RSRP #2, if reported |
| | Differential RSRP #3, if reported |
| | Differential RSRP #4, if reported |

| **CSI Report Serial Number** | **CSI Field** |
|---|---|
| CSI Report #n Part #2 | CRI #5, or SSBRI #5, or beam pair #5, if reported |
| | CRI #6, or SSBRI #6, or beam pair #6, if reported |
| | CRI #7, or SSBRI #7, or beam pair #7, if reported |
| | CRI #8, or SSBRI #8, or beam pair #8, if reported |
| | Differential RSRP #5, if reported |
| | Differential RSRP #6, if reported |
| | Differential RSRP #7, if reported |
| | Differential RSRP #8, if reported |
| CSI Report #n Part #M | CRI # Size(Set B1) - 4, or SSBRI # Size(Set B1) - 4, or beam pair # Size(Set B1) - 4, if reported |
| | CRI # Size(Set B1) - 3, or SSBRI # Size(Set B1) - 3, or beam pair # Size(Set B1) - 3, if reported |
| | CRI # Size(Set B1) - 2, or SSBRI # Size(Set B1) -2, or beam pair # Size(Set B1) - 2, if reported |
| | CRI # Size(Set B1) - 1, or SSBRI # Size(Set B1) - 1, or beam pair # Size(Set B1) - 1, if reported |
| | Differential RSRP #Size(Set B1) - 4, if reported |
| | Differential RSRP #Size(Set B1) - 3, if reported |
| | Differential RSRP #Size(Set B1) - 2, if reported |
| | Differential RSRP #Size(Set B1) - 1, if reported |

In some embodiments, the network device inputs the measurement result of the first reference signal set into a seventh network model, and outputs the identification information groups of the K spatial filters and/or the link quality information groups corresponding to the K spatial filters;
where the seventh network model is a network model that meets the first type of spatial filter prediction mechanism.

In some embodiments, the seventh network model is determined by the network device, or the seventh network model is determined and indicated by the terminal device.

In some embodiments, the network device inputs the measurement result of the first reference signal set into an eighth network model, and outputs the identification information groups of the K spatial filters; and the network device inputs the measurement result of the first reference signal set into a ninth network model, and outputs the link quality information groups corresponding to the K spatial filters;
where the seventh network model and the eighth network model are network models that meet the first type of spatial filter prediction mechanism.

In some embodiments, the seventh network model is configured or indicated by the network device, or the seventh network model is determined by the terminal device; and/or the eighth network model is configured or indicated by the network device, or the eighth network model is determined by the terminal device.

In some embodiments, the terminal device receives first indication information; where the first indication information is used for indicating a predicted identification information group of a spatial filter used in the identification information groups of the K spatial filters.

Specifically, after receiving the first prediction information transmitted by the terminal device, the network device may transmit the first indication information based on the first prediction information, i.e., indicate a predicted identification information group of a spatial filter used in the identification information groups of the K spatial filters.

In some embodiments, the first indication information may be carried by one of the following: DCI, or MAC CE.

In some embodiments, the first indication information is at least one TCI state indication.

Specifically, within the first type of spatial filter prediction mechanism, regardless of whether the network model infers a transmit beam or a beam pair, the TCI state indication method may be used, and the network device may use MAC CE and/or DCI to indicate a maximum of 2 TCI states. After receiving the indication of the TCI state, the terminal device uses a corresponding receive beam for reception. If the network model infers a beam pair, the network device may also refer to the reporting of beam pair information for a beam pair information indication to the terminal device, where this indication includes at least 2 beam pair indexes. The network device transmits a downlink channel and a signal according to a transmit beam in the beam pair information, and the terminal device receives the downlink channel and the signal by finding a corresponding receive beam according to a receive beam index in the beam pair information.

In some embodiments, in a case where the target type of spatial filter prediction mechanism is the second type of spatial filter prediction mechanism and the terminal device performs a spatial filter prediction, the first capability information further includes at least one of the following:
a maximum number of reference signal resources included in the second reference signal set and supported by the terminal device;
a maximum number of reference signal resources included in the third reference signal set and supported by the terminal device;
a maximum number of spatial filters included in the third prediction data set and supported by the terminal device;
a maximum number of spatial filters included in the fourth prediction data set and supported by the terminal device;
a maximum value of P supported by the terminal device;
a number of receiving spatial filters of the terminal device; or
a number of receiving antenna panels of the terminal device.

Specifically, the terminal device informs the network device through a terminal capability report whether the terminal device supports the second type of spatial filter prediction mechanism. If the second type of spatial filter prediction mechanism is supported, that is, the inferring of group beams (pairs) of two prediction sets from two measurement sets is supported, the terminal capabilities that should further be reported include but are not limited to:
a maximum number of SSB resources and/or CSI-RS resources that the terminal device is able to measure in the second reference signal set (Set B2), i.e., a maximum size of the second reference signal set (Set B2);
a maximum number of SSB resources and/or CSI-RS resources that the terminal device is able to measure in the third reference signal set (Set B3), i.e., a maximum size of the second reference signal set (Set B3);
a maximum number of beams (pairs) that the terminal device is able to predict in each prediction data set, i.e., a maximum size of the third prediction data set (Set A3) and a maximum size of the fourth prediction data set (Set A4);
a maximum number of beam (pair) groups that the terminal device is able to predict, i.e., Pmax;
a number of receive beams that the terminal device explicitly or implicitly reports in beam (pair) measurement and prediction; or
a number of its receiving antenna panels that the terminal device reports (Optional).

Optionally, for an explicit report, the terminal device directly reports a number of receive beams of each of its antenna panels.

Optionally, for an implicit report, the terminal device reports a maximum number of resources for CSI-RS repetition transmission (CSI-RS resource set with repetition ON) used for beam sweeping.

In some embodiments, the terminal device receives third information.

Optionally, the third information is used for configuring at least one of the following: the second reference signal set, the third reference signal set, the third prediction data set, or the fourth prediction data set. For example, the third information is carried through an RRC signaling.

Optionally, the third information is used for activating at least one of the following: one second reference signal set among a pre-configured plurality of second reference signal sets, one third reference signal set from a pre-configured plurality of third reference signal sets, one third prediction data set among a pre-configured plurality of third prediction data sets, or one fourth prediction data set among a pre-configured plurality of fourth prediction data sets. For example, the third information is carried by MAC CE.

Specifically, the network device configures and/or activates a second reference signal set (Set B2) and a third reference signal set (Set B3) associated with the network model input for the terminal device.

The network device uses an RRC signaling to configure one or multiple groups of Set B2 and one or multiple groups of Set B3 for the terminal device, i.e., CSI-RS resources and/or SSB resources required for downlink measurement. If the network device is configured with multiple groups of Set B2 and multiple groups of Set B3, the network device further needs to use a MAC CE signaling to activate one group of Set B2 and one group of Set B3 in multiple groups of configurations according to actual deployment conditions and antenna configuration conditions; otherwise, the network device only uses one configured group of Set B2 and one configured group of Set B3.

Specifically, the network device configures and/or activates a third prediction data set (Set A3) and a fourth prediction data set (Set A4) associated with the network model output for the terminal device.

The network device uses an RRC signaling to configure beam (pair) prediction sets of one or multiple groups of Set A3 and one or multiple groups of Set A4 for the terminal device. If the network device is configured with multiple groups of Set A3 and multiple groups of Set A4, the network device further needs to use a MAC CE signaling to activate one group of Set A3 and one group of Set A4 in multiple groups of configurations according to actual deployment conditions and antenna configuration conditions; otherwise, the network device only uses one configured group of Set A3 and one configured group of Set A4.

In some embodiments, the terminal device inputs a second measurement data set and a third measurement data set into a fourth network model, and outputs the identification information groups of the P spatial filters and/or the link quality information groups corresponding to the P spatial filters;
where the fourth network model is a network model that meets the second type of spatial filter prediction mechanism;
where the second measurement data set includes at least one of the following: the identification information of the spatial filters measured based on the second reference signal set, or the link quality information corresponding to the spatial filters measured based on the second reference signal set; and
where the third measurement data set includes at least one of the following: the identification information of the spatial filters measured based on the third reference signal set, or the link quality information corresponding to the spatial filters measured based on the third reference signal set.

In some embodiments, the fourth network model is configured or indicated by the network device, or the fourth network model is determined by the terminal device.

In some embodiments, the terminal device inputs a second measurement data set and a third measurement data set into a fifth network model, and outputs the identification information groups of the P spatial filters; and the terminal device inputs the second measurement data set and the third measurement data set into a sixth network model, and outputs the link quality information groups corresponding to the P spatial filters;
where the fifth network model and the sixth network model are network models that meet the second type of spatial filter prediction mechanism;
where the second measurement data set includes at least one of the following: the identification information of the spatial filters measured based on the second reference signal set, or the link quality information corresponding to the spatial filters measured based on the second reference signal set; and
where the third measurement data set includes at least one of the following: the identification information of the spatial filters measured based on the third reference signal set, or the link quality information corresponding to the spatial filters measured based on the third reference signal set.

In some embodiments, the fifth network model is configured or indicated by the network device, or the fifth network model is determined by the terminal device; and/or the sixth network model is configured or indicated by the network device, or the sixth network model is determined by the terminal device.

As a specific example, if the terminal device supports the second type of spatial filter prediction mechanism and the network model used for prediction is a cell-specific model, the network device will transmit the network model adapted to the network device deployment environment and beam (pair) configuration to the terminal device. For example, the network device indicates a dedicated model ID (the identity (ID) defined in the lifecycle management of the model to identify different models) to the terminal device through RRC and/or MAC CE. Alternatively, the terminal device initiates a network model pre-prepared by itself, and may optionally inform the network device of information about the model, e.g., through a model ID. When the model ID is used in the model communication process, one of the most important assumptions is that the network device and the terminal device have a clear consensus and understanding of the model details expressed by the model ID.

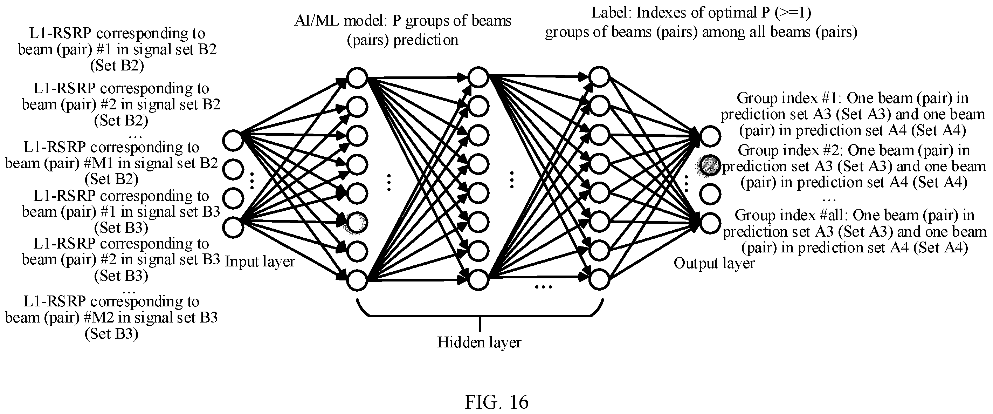

Specifically, the UE measures the downlink reference signal resources in Set B2 and Set B3, and uses corresponding beam (pair) indexes and/or L1-RSRPs of the beams (pairs) as the input of the model. As illustrated in FIG. 16, L1-RSRPs (according to the measurement resource order of Set B3 and Set B4) are used as the input of the model. The output of the model is P groups of beams (pairs).

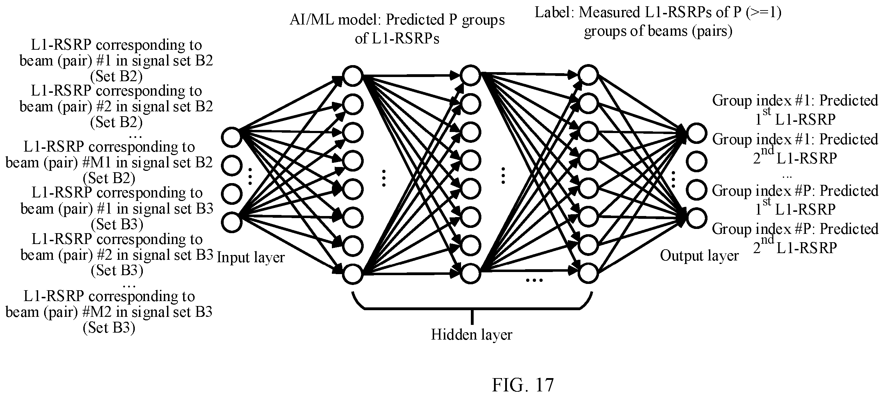

Specifically, in FIG. 17, Set B2 and Set B3 are used as the input of the model, the L1-RSRP performance of the optimal P groups of beams (pairs) may be inferred.

In some embodiments, the terminal device transmits second prediction information;
where the second prediction information includes at least one of the following: the identification information groups of the P spatial filters, or link quality information groups corresponding to the P spatial filters.

In some embodiments, link quality information in the link quality information groups corresponding to the P spatial filters is represented in a differential manner.

The specific reporting methods may be referred to the relevant descriptions in Table 1 and Table 2 above, which will not be repeated here for the sake of brevity.

In some embodiments, the terminal device receives second indication information; where the second indication information is used for indicating a predicted identification information group of a spatial filter used in the identification information groups of the P spatial filters.

In some embodiments, the second indication information is at least one TCI state indication.

Specifically, within the second type of spatial filter prediction mechanism, regardless of whether the network model infers a transmit beam or a beam pair, the TCI state indication method may be used, and the network device may use MAC CE and/or DCI to indicate a maximum of 2 TCI states. After receiving the indication of the TCI state, the terminal device uses a corresponding receive beam for reception. If the network model infers a beam pair, the network device may also refer to the reporting of beam pair information for a beam pair information indication to the terminal device, where this indication includes at least 2 beam pair indexes. The network device transmits a downlink channel and a signal according to a transmit beam in the beam pair information, and the terminal device receives the downlink channel and the signal by finding a corresponding receive beam according to a receive beam index in the beam pair information.

In some embodiments, in a case where the target type of spatial filter prediction mechanism is the second type of spatial filter prediction mechanism and the terminal device does not perform a spatial filter prediction, the first capability information further includes at least one of the following:
a maximum number of reference signal resources included in the first reference signal set and supported by the terminal device;
a maximum number of reference signal resources included in the second reference signal set and supported by the terminal device;
a maximum number of pieces of identification information of spatial filters supporting reporting and/or a maximum number of pieces of link quality information corresponding to the spatial filters in one measurement result report of the terminal device;
a number of receiving spatial filters of the terminal device; or
a number of receiving antenna panels of the terminal device.

Specifically, since the network model is not deployed on the terminal side, the terminal device only needs to inform the network device of the corresponding beam measurement and reporting capabilities. The terminal device informs the network device whether the terminal device supports the second type of spatial filter prediction mechanism through the terminal capability report. If the second type of spatial filter prediction mechanism is supported, that is, the inferring of group beams (pairs) of two prediction sets from two measurement sets is supported, the terminal capabilities that should further be reported include but are not limited to:
a maximum number of SSB resources and/or CSI-RS resources that the terminal device is able to measure in the second reference signal set (Set B2) and the third reference signal set (Set B3), i.e., a maximum size of the second reference signal set (Set B2) and a maximum size of the third reference signal set (Set B3);
a maximum of indexes of beams (pairs) and link qualities thereof (such as L1-RSRPs) that the terminal device is able to report in one report of beam (pair) measurement results;
a number of receive beams that the terminal device explicitly or implicitly reports in beam (pair) measurement and prediction; or
a number of its receiving antenna panels that the terminal device reports (Optional).

Optionally, for an explicit report, the terminal device directly reports a number of receive beams of each of its antenna panels.

Optionally, for an implicit report, the terminal device reports a maximum number of resources for CSI-RS repetition transmission (CSI-RS resource set with repetition ON) used for beam sweeping.

In some embodiments, the network model is deployed on the network side and is generally a cell-specific model, and the terminal does not need to transmit the model to the network device. The network device may use a private model, and there is no need to transmit the model between the network device and the terminal device.

In some embodiments, the terminal device receives fourth information;
where the fourth information is used for configuring the second reference signal set and the third reference signal set; or the fourth information is used for activating one second reference signal set from a pre-configured plurality of second reference signal sets, and for activating one third reference signal set from a pre-configured plurality of third reference signal sets.

Specifically, the network device configures and/or activates a second reference signal set (Set B2) and a third reference signal set (Set B3) associated with the network model input for the terminal device.

The network device uses an RRC signaling to configure one or multiple groups of Set B2 and one or multiple groups of Set B3 for the terminal device, i.e., CSI-RS resources and/or SSB resources required for downlink measurement. If the network device is configured with multiple groups of Set B2 and multiple groups of Set B3, the network device further needs to use a MAC CE signaling to activate one group of Set B2 and one group of Set B3 in multiple groups of configurations according to actual deployment conditions and antenna configuration conditions; otherwise, the network device only uses one configured group of Set B2 and one configured group of Set B3.

It will be noted that since the network model is deployed on the network side, the terminal device does not need to know the situation of the third prediction data set (Set A3) and the fourth prediction data set (Set A4).

In some embodiments, the terminal device transmits a measurement result of the second reference signal set and a measurement result of the third reference signal set;
where the measurement result of the second reference signal set includes at least one of the following: the identification information of the spatial filters measured based on the second reference signal set, or the link quality information corresponding to the spatial filters measured based on the second reference signal set; and
where the measurement result of the third reference signal set includes at least one of the following: the identification information of the spatial filters measured based on the third reference signal set, or the link quality information corresponding to the spatial filters measured based on the third reference signal set.

In some embodiments, the link quality information corresponding to the spatial filters measured based on the second reference signal set is represented in a differential manner, and/or the link quality information corresponding to the spatial filters measured based on the third reference signal set is represented in a differential manner.

For example, the terminal device only reports the link qualities of the beams (pairs) in Set B2 and Set B3 in a specific order, such as L1-RSRPs, as illustrated in Table 6.

**Table 6**

| **CSI Report Serial Number** | **CSI Field** |
|---|---|
| CSI Report #n | RSRP of SSBRI#1 in Set B2, or RSRP of CRI#1 in Set B2, or RSRP of beam pair #1 in Set B2 |
| | RSRP of SSBRI#2 in Set B2, or RSRP of CRI#2 in Set B2, or RSRP of beam pair #2 in Set B2 |
| | ... |
| | RSRP of SSBRI# Size in Set B2, or RSRP of CRI# Size in Set B2, or RSRP of beam pair # Size in Set B2 |
| | RSRP of SSBRI#1 in Set B3, or RSRP of CRI#1 in Set B3, or RSRP of beam pair #1 in Set B3 |
| | RSRP of SSBRI#2 in Set B3, or RSRP of CRI#2 in Set B3, or RSRP of beam pair #2 in Set B3 |
| | ... |
| | RSRP of SSBRI# Size in Set B3, or RSRP of CRI# Size in Set B3, or RSRP of beam pair # Size in Set B3 |

For another specific example, the terminal device reports that the highest L1-RSRP is measured in Set B2 or Set B3, reports SSBRI, CRI or beam pair in the resource set which measures the highest L1-RSRP, and reports the highest L1-RSRP value. Subsequently, the terminal device reports the differential values of other SSBs, CRIs or beam pairs relative to the highest L1-RSRP in sequence, as illustrated in Table 7.

**Table 7**

| **CSI Report Serial Number** | **CSI Field** |
|---|---|
| **CSI Report #n** | Highest RSRP value of the SSBRI in Set B2 or Set B3, or highest RSRP value of the CRI in Set B2 or Set B3, or highest RSRP value of a beam pair in Set B2 or Set B3 |
| | SSBRI with highest RSRP in Set B2 or Set B3, or CRI with highest RSRP in Set B2 or Set B3, or beam pair with highest RSRP in Set B2 or Set B3 |
| | Set B2 or Set B3 indication (reference signal set where highest RSRP value exists) |
| | Differential RSRP of SSBRI#1 in Set B2, or differential RSRP of CRI#1 in Set B2, or differential RSRP of beam pair #1 in Set B2 |
| | Differential RSRP of SSBRI#2 in Set B2, or differential RSRP of CRI#2 in Set B2, or differential RSRP of beam pair #2 in Set B2 |
| | ... |
| | Differential RSRP of SSBRI# Size in Set B2, or differential RSRP of CRI# Size in Set B2, or differential RSRP of beam pair # Size in Set B2 |
| | Differential RSRP of SSBRI#1 in Set B3, or differential RSRP of CRI#1 in Set B3, or differential RSRP of beam pair #1 in Set B3 |
| | Differential RSRP of SSBRI#2 in Set B3, or differential RSRP of CRI#2 in Set B3, or differential RSRP of beam pair #2 in Set B3 |
| | ... |
| | Differential RSRP of SSBRI# Size in Set B3, or differential RSRP of CRI# Size in Set B3, or differential RSRP of beam pair # Size in Set B3 |

For yet another specific example, the terminal device reports the beam (pair) indexes of the second reference signal set (Set B2) and the third reference signal set (Set B3) and the corresponding link qualities, such as L1-RSRPs. As illustrated in Table 8, a highest L1-RSRP may be selected as a benchmark for Set B2 and a highest L1-RSRP may be selected as a benchmark for Set B3, to differentiate other RSRPs. Alternatively, a highest L1-RSRP may be selected from Set B2 and Set B3, and the remaining beams (pairs) in Set B2 and Set B3 may be used to report it differentially.

**Table 8**

| **CSI Report serial number** | **CSI Field** |
|---|---|
| CSI Report #n Part #1 | CRI #1 in Set B2, or SSBRI #1 in Set B2, or beam pair #1 in Set B2, if reported |
| | CRI #2 in Set B2, or SSBRI #2 in Set B2, or beam pair #2 in Set B2, if reported |
| | CRI #3 in Set B2, or SSBRI #3 in Set B2, or beam pair #3 in Set B2, if reported |
| | CRI #4 in Set B2, or SSBRI #4 in Set B2, or beam pair #4 in Set B2, if reported |
| | RSRP #1, if reported |
| | Differential RSRP #2, if reported |
| | Differential RSRP #3, if reported |
| | Differential RSRP #4, if reported |
| ... | |

| **CSI Report** Serial Number | **CSI Field** |
|---|---|
| CSI Report #n Part #M1 | CRI # Size(Set B2) - 4 in Set B2, or SSBRI # Size(Set B2) - 4 in Set B2, or beam pair # Size(Set B2) - 4 in Set B2, if reported |
| | CRI # Size(Set B2) - 3 in Set B2, or SSBRI # Size(Set B2) - 3 in Set B2, or beam pair # Size(Set B2) - 3 in Set B2, if reported |
| | CRI # Size(Set B2) -2 in Set B2, or SSBRI # Size(Set B2) - 2 in Set B2, or beam pair # Size(Set B2) -2 in Set B2, if reported |
| | CRI # Size(Set B2) in Set B2 - 1, or SSBRI # Size(Set B2) in Set B2 - 1, or beam pair # Size(Set B2) in Set B2 - 1, if reported |
| | Differential RSRP #Size(Set B2) - 4, if reported |
| | Differential RSRP #Size(Set B2) - 3, if reported |
| | Differential RSRP #Size(Set B2) - 2, if reported |
| | Differential RSRP #Size(Set B2) - 1, if reported |

| **CSI Report Serial Number** | **CSI Field** |
|---|---|
| CSI Report #n Part #M1+1 | CRI #1 in Set B3, or SSBRI #1 in Set B3, or beam pair #1 in Set B3, if reported |
| | CRI #2 in Set B3, or SSBRI #2 in Set B3, or beam pair #2 in Set B3, if reported |
| | CRI #3 in Set B3, or SSBRI #3 in Set B3, or beam pair #3 in Set B3, if reported |
| | CRI #4 in Set B3, or SSBRI #4 in Set B3, or beam pair #4 in Set B3, |
| | if reported |
| | RSRP #1, if reported |
| | Differential RSRP #2, if reported |
| | Differential RSRP #3, if reported |
| | Differential RSRP #4, if reported |
| ... | |
| CSI Report #n Part #M1+M2 | CRI # Size(Set B3) - 4 in Set B3, or SSBRI # Size(Set B3) - 4 in Set B3, or beam pair # Size(Set B3) - 4 in Set B3, if reported |
| | CRI # Size(Set B3) - 3 in Set B3, or SSBRI # Size(Set B3) - 3 in Set B3, or beam pair # Size(Set B3) - 3 in Set B3, if reported |
| | CRI # Size(Set B3) - 2 in Set B3, or SSBRI # Size(Set B3) - 2 in Set B3, or beam pair # Size(Set B3) - 2 in Set B3, if reported |
| | CRI # Size(Set B3) - 1 in Set B3, or SSBRI # Size(Set B3) - 1 in Set B3, or beam pair # Size(Set B3) - 1 in Set B3, if reported |
| | Differential RSRP #Size(Set B3) - 4, if reported |
| | Differential RSRP #Size(Set B3) - 3, if reported |
| | Differential RSRP #Size(Set B3) - 2, if reported |
| | Differential RSRP #Size(Set B3) - 1, if reported |

In some embodiments, the network device inputs the measurement result of the second reference signal set and the measurement result of the third reference signal set into a tenth network model, and outputs the identification information groups of the P spatial filters and/or the link quality information groups corresponding to the P spatial filters; where the tenth network model is a network model that meets the second type of spatial filter prediction mechanism.

In some embodiments, the tenth network model is determined by the network device, or the tenth network model is determined and indicated by the terminal device.

In some embodiments, the network device inputs the measurement result of the second reference signal set and the measurement result of the third reference signal set into an eleventh network model, and outputs the identification information groups of the P spatial filters; and the network device inputs the measurement result of the second reference signal set and the measurement result of the third reference signal set into a twelfth network model, and outputs the link quality information groups corresponding to the P spatial filters;
where the eleventh network model and the twelfth network model are network models that meet the second type of spatial filter prediction mechanism.

In some embodiments, the eleventh network model is determined by the network device, or the eleventh network model is determined and indicated by the terminal device; and/or the twelfth network model is determined by the network device, or the twelfth network model is determined and indicated by the terminal device.

In some embodiments, the terminal device receives second indication information; where the second indication information is used for indicating a predicted identification information group of a spatial filter used in the identification information groups of the P spatial filters.

In some embodiments, the second indication information is at least one TCI state indication.

Therefore, in the embodiments of the present disclosure, the terminal device may indicate whether the terminal device supports the target type of spatial filter prediction mechanism, and within the target type of spatial filter prediction mechanism, a spatial-domain group spatial filter prediction may be performed based on one or more network models, thereby improving the performance of the beam management system.

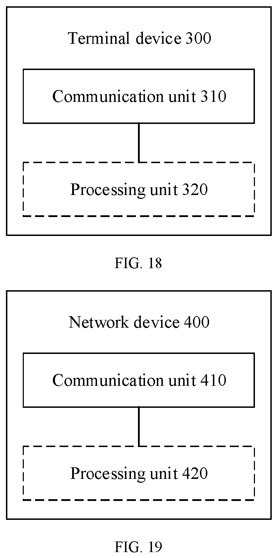

With reference to FIGS. 11 to 17, the method embodiments of the present disclosure have been described in detail in the above. The device/apparatus embodiments of the present disclosure will be described below in detail with reference to FIGS. 18 to 22. It should be understood that the device/apparatus embodiments correspond to the method embodiments, and references may be made to the method embodiments.

FIG. 18 shows a schematic block diagram of a terminal device 300 in accordance with the embodiments of the present disclosure. As illustrated in FIG. 18, the terminal device 300 includes:
a communication unit 310, configured to transmit first capability information;
where the first capability information is used for indicating whether the terminal device supports a target type of spatial filter prediction mechanism, and within the target type of spatial filter prediction mechanism, one or more network models are used to perform a spatial-domain group spatial filter prediction.

In some embodiments, the target type of spatial filter prediction mechanism is a first type of spatial filter prediction mechanism, or the target type of spatial filter prediction mechanism is a second type of spatial filter prediction mechanism;
where within the first type of spatial filter prediction mechanism, an input of the network model(s) includes at least one of the following: identification information of spatial filters measured based on a first reference signal set, or link quality information corresponding to the spatial filters measured based on the first reference signal set; and an output of the network model(s) includes at least one of the following: identification information groups of K spatial filters, or link quality information groups corresponding to the K spatial filters; where the identification information groups of the K spatial filters are composed of identification information of K₁ spatial filters predicted in a first prediction data set and identification information of K₂ spatial filters predicted in a second prediction data set, and the link quality information groups corresponding to the K spatial filters are composed of link quality information corresponding to the K₁ spatial filters predicted in the first prediction data set and link quality information corresponding to the K₂ spatial filters predicted in the second prediction data set, K, K₁ and K₂ being all positive integers; or
where within the second type of spatial filter prediction mechanism, an input of the network model(s) includes at least one of the following: identification information of spatial filters measured based on a second reference signal set and a third reference signal set, or link quality information corresponding to the spatial filters measured based on the second reference signal set and the third reference signal set; and an output of the network model(s) includes at least one of the following: identification information groups of P spatial filters, or link quality information groups corresponding to the P spatial filters; where the identification information groups of the P spatial filters are composed of identification information of P₁ spatial filters predicted in a third prediction data set and identification information of P₂ spatial filters predicted in a fourth prediction data set, and the link quality information groups corresponding to the P spatial filters are composed of link quality information corresponding to the P₁ spatial filters predicted in the third prediction data set and link quality information corresponding to the P₂ spatial filters predicted in the fourth prediction data set, P, P₁ and P₂ being all positive integers.

In some embodiments, within the first type of spatial filter prediction mechanism, K ≤ K₁×K₂; or
within the second type of spatial filter prediction mechanism, P ≤ P₁×P₂.

In some embodiments, within the first type of spatial filter prediction mechanism, the first prediction data set and the second prediction data set correspond to different base stations or transmission reception points (TRPs); or
within the second type of spatial filter prediction mechanism, the third prediction data set and the fourth prediction data set correspond to different base stations or TRPs.

In some embodiments, within the first type of spatial filter prediction mechanism, the first reference signal set and the first prediction data set correspond to a same base station or TRP, and the first reference signal set and the second prediction data set correspond to different base stations or TRPs; or
within the second type of spatial filter prediction mechanism, the second reference signal set and the third prediction data set correspond to a same base station or TRP, and the third reference signal set and the fourth prediction data set correspond to a same base station or TRP.

In some embodiments, within the first type of spatial filter prediction mechanism, the spatial filters measured based on the first reference signal set are the same as spatial filters in the first prediction data set, or the spatial filters measured based on the first reference signal set are a subset of the spatial filters in the first prediction data set, or each of the spatial filters measured based on the first reference signal set meets a spatial-domain Quasi-Co-Located (QCL) relation with multiple ones of the spatial filters in the first prediction data set; or
within the second type of spatial filter prediction mechanism, the spatial filters measured based on the second reference signal set are the same as spatial filters in the third prediction data set, or the spatial filters measured based on the third reference signal set are the same as spatial filters in the fourth prediction data set, or the spatial filters measured based on the second reference signal set are a subset of the spatial filters in the third prediction data set, or the spatial filters measured based on the third reference signal set are a subset of the spatial filters in the fourth prediction data set, or each of the spatial filters measured based on the second reference signal set meets a spatial-domain QCL relation with multiple ones of the spatial filters in the third prediction data set, or each of the spatial filters measured based on the third reference signal set meets a spatial-domain QCL relation with multiple ones of the spatial filters in the fourth prediction data set.

In some embodiments, within the first type of spatial filter prediction mechanism, an identification information group of an optimal spatial filter among the identification information groups of the K spatial filters is a combination of a first spatial filter and a second spatial filter; where the first spatial filter is a spatial filter with the highest link quality information corresponding thereto among the K₁ spatial filters, and the second spatial filter is a spatial filter with the highest link quality information among spatial filters that are allowed to be received by the terminal device simultaneously with the first spatial filter among the K₂ spatial filters; or the first spatial filter is a spatial filter with the highest link quality information among spatial filters that are allowed to be received by the terminal device simultaneously among the K₁ spatial filters, and the second spatial filter is a spatial filter with the highest link quality information among spatial filters that are allowed to be received by the terminal device simultaneously among the K₂ spatial filters; or
within the second type of spatial filter prediction mechanism, an identification information group of an optimal spatial filter among the identification information groups of the P spatial filters is a combination of the third spatial filter and the fourth spatial filter; where the third spatial filter is a spatial filter with the highest link quality information corresponding thereto among the P₁ spatial filters, and the fourth spatial filter is a spatial filter with the highest link quality information among spatial filters that are allowed to be received by the terminal device simultaneously with the third spatial filter among the P₂ spatial filters; or the third spatial filter is a spatial filter with the highest link quality information among spatial filters that are allowed to be received by the terminal device simultaneously among the P₁ spatial filters, and the fourth spatial filter is a spatial filter with the highest link quality information among spatial filters that are allowed to be received by the terminal device simultaneously among the P₂ spatial filters.

In some embodiments, in a case where the target type of spatial filter prediction mechanism is the first type of spatial filter prediction mechanism and the terminal device performs a spatial filter prediction, the first capability information further includes at least one of the following:
a maximum number of reference signal resources included in the first reference signal set and supported by the terminal device;
a maximum number of spatial filters included in the first prediction data set and supported by the terminal device;
a maximum number of spatial filters included in the second prediction data set and supported by the terminal device;
a maximum value of K supported by the terminal device;
a number of receiving spatial filters of the terminal device; or
a number of receiving antenna panels of the terminal device.

In some embodiments, the communication unit 310 is further configured to receive first information;
where the first information is used for configuring at least one of the following: the first reference signal set, the first prediction data set, or the second prediction data set; or the first information is used for activating at least one of the following: one first reference signal set among a pre-configured plurality of first reference signal sets, one first prediction data set among a pre-configured plurality of first prediction data sets, or one second prediction data set among a pre-configured plurality of second prediction data sets.

In some embodiments, the terminal device 300 further includes: a processing unit 320; where the processing unit 320 is configured to input a first measurement data set into a first network model, and output the identification information groups of the K spatial filters and/or the link quality information groups corresponding to the K spatial filters;
where the first network model is a network model that meets the first type of spatial filter prediction mechanism; and
where the first measurement data set includes at least one of the following: identification information of the spatial filters measured based on the first reference signal set, or link quality information corresponding to the spatial filters measured based on the first reference signal set.

In some embodiments, the first network model is configured or indicated by a network device, or the first network model is determined by the terminal device.

In some embodiments, the terminal device 300 further includes: a processing unit 320; where the processing unit 320 is configured to input the first measurement data set into a second network model, and output the identification information groups of the K spatial filters; and the processing unit 320 is configured to input the first measurement data set into a third network model, and output the link quality information groups corresponding to the K spatial filters;
where the second network model and the third network model are network models that meet the first type of spatial filter prediction mechanism; and the first measurement data set includes at least one of the following: identification information of the spatial filters measured based on the first reference signal set, or link quality information corresponding to the spatial filters measured based on the first reference signal set.

In some embodiments, the second network model is configured or indicated by the network device, or the second network model is determined by the terminal device; and/or the third network model is configured or indicated by the network device, or the third network model is determined by the terminal device.

In some embodiments, the communication unit 310 is further configured to transmit the first prediction information;
where the first prediction information includes at least one of the following: the identification information groups of the K spatial filters, or the link quality information groups corresponding to the K spatial filters.

In some embodiments, link quality information in the link quality information groups corresponding to the K spatial filters is represented in a differential manner.

In some embodiments, in a case where the target type of spatial filter prediction mechanism is the first type of spatial filter prediction mechanism and the terminal device does not perform a spatial filter prediction, the first capability information further includes at least one of the following:
a maximum number of reference signal resources included in the first reference signal set and supported by the terminal device;
a maximum number of pieces of identification information of spatial filters supporting reporting and/or a maximum number of pieces of link quality information corresponding to the spatial filters in one measurement result report of the terminal device;
a number of receiving spatial filters of the terminal device; or
a number of receiving antenna panels of the terminal device.

In some embodiments, the communication unit 310 is further configured to receive second information;
where the second information is used for configuring the first reference signal set, or the second information is used for activating one first reference signal set from a pre-configured plurality of first reference signal sets.

In some embodiments, the communication unit 310 is further configured to transmit a measurement result of the first reference signal set;
where the measurement result of the first reference signal set includes at least one of the following: identification information of the spatial filters measured based on the first reference signal set, or link quality information corresponding to the spatial filters measured based on the first reference signal set.

In some embodiments, the link quality information corresponding to the spatial filters measured based on the first reference signal set is represented in a differential manner.

In some embodiments, the communication unit 310 is further configured to receive first indication information; where the first indication information is used for indicating a predicted identification information group of a spatial filter used in the identification information groups of the K spatial filters.

In some embodiments, the first indication information is at least one transmission configuration indicator (TCI) state indication.

In some embodiments, the first reference signal set includes at least one of the following reference signals:
a synchronization signal block (SSB), or a channel state information reference signal (CSI-RS).

In some embodiments, in a case where the target type of spatial filter prediction mechanism is the second type of spatial filter prediction mechanism and the terminal device performs a spatial filter prediction, the first capability information further includes at least one of the following:
a maximum number of reference signal resources included in the second reference signal set and supported by the terminal device;
a maximum number of reference signal resources included in the third reference signal set and supported by the terminal device;
a maximum number of spatial filters included in the third prediction data set and supported by the terminal device;
a maximum number of spatial filters included in the fourth prediction data set and supported by the terminal device;
a maximum value of P supported by the terminal device;
a number of receiving spatial filters of the terminal device; or
a number of receiving antenna panels of the terminal device.

In some embodiments, the communication unit 310 is further configured to receive third information;
where the third information is used for configuring at least one of the following: the second reference signal set, the third reference signal set, the third prediction data set, or the fourth prediction data set; or
the third information is used for activating at least one of the following: one second reference signal set among a pre-configured plurality of second reference signal sets, one third reference signal set among a pre-configured plurality of third reference signal sets, one third prediction data set among a pre-configured plurality of third prediction data sets, or one fourth prediction data set among a pre-configured plurality of fourth prediction data sets.

In some embodiments, the terminal device 300 further includes: a processing unit 320; where the processing unit 320 is configured to input a second measurement data set and a third measurement data set into a fourth network model, and output the identification information groups of the P spatial filters and/or the link quality information groups corresponding to the P spatial filters;
where the fourth network model is a network model that meets the second type of spatial filter prediction mechanism;
where the second measurement data set includes at least one of the following: the identification information of the spatial filters measured based on the second reference signal set, or the link quality information corresponding to the spatial filters measured based on the second reference signal set; and
where the third measurement data set includes at least one of the following: the identification information of the spatial filters measured based on the third reference signal set, or the link quality information corresponding to the spatial filters measured based on the third reference signal set.

In some embodiments, the fourth network model is configured or indicated by the network device, or the fourth network model is determined by the terminal device.

In some embodiments, the terminal device 300 further includes: a processing unit 320; where the processing unit 320 is configured to input a second measurement data set and a third measurement data set into a fifth network model, and output the identification information groups of the P spatial filters; and the processing unit 320 is configured to input the second measurement data set and the third measurement data set into a sixth network model, and output the link quality information groups corresponding to the P spatial filters;
where the fifth network model and the sixth network model are network models that meet the second type of spatial filter prediction mechanism;
where the second measurement data set includes at least one of the following: the identification information of the spatial filters measured based on the second reference signal set, or the link quality information corresponding to the spatial filters measured based on the second reference signal set; and
where the third measurement data set includes at least one of the following: the identification information of the spatial filters measured based on the third reference signal set, or the link quality information corresponding to the spatial filters measured based on the third reference signal set.

In some embodiments, the fifth network model is configured or indicated by the network device, or the fifth network model is determined by the terminal device; and/or the sixth network model is configured or indicated by the network device, or the sixth network model is determined by the terminal device.

In some embodiments, the communication unit 310 is further configured to transmit second prediction information;
where the second prediction information includes at least one of the following: the identification information groups of the P spatial filters, or the link quality information groups corresponding to the P spatial filters.

In some embodiments, link quality information in the link quality information groups corresponding to the P spatial filters is represented in a differential manner.

In some embodiments, in a case where the target type of spatial filter prediction mechanism is the second type of spatial filter prediction mechanism and the terminal device does not perform a spatial filter prediction, the first capability information further includes at least one of the following:
a maximum number of reference signal resources included in the first reference signal set and supported by the terminal device;
a maximum number of reference signal resources included in the second reference signal set and supported by the terminal device;
a maximum number of pieces of identification information of spatial filters supporting reporting and/or a maximum number of pieces of link quality information corresponding to the spatial filters in one measurement result report of the terminal device;
a number of receiving spatial filters of the terminal device; or
a number of receiving antenna panels of the terminal device.

In some embodiments, the communication unit 310 is further configured to receive fourth information;
where the fourth information is used for configuring the second reference signal set and the third reference signal set; or the fourth information is used for activating one second reference signal set from a pre-configured plurality of second reference signal sets, and for activating one third reference signal set from a pre-configured plurality of third reference signal sets.

In some embodiments, the communication unit 310 is further configured to transmit a measurement result of the second reference signal set and a measurement result of the third reference signal set;
where the measurement result of the second reference signal set includes at least one of the following: the identification information of the spatial filters measured based on the second reference signal set, or the link quality information corresponding to the spatial filters measured based on the second reference signal set; and
where the measurement result of the third reference signal set includes at least one of the following: the identification information of the spatial filters measured based on the third reference signal set, or the link quality information corresponding to the spatial filters measured based on the third reference signal set.

In some embodiments, the link quality information corresponding to the spatial filters measured based on the second reference signal set is represented in a differential manner, and/or the link quality information corresponding to the spatial filters measured based on the third reference signal set is represented in a differential manner.

In some embodiments, the communication unit 310 is further configured to receive second indication information; where the second indication information is used for indicating a predicted identification information group of a spatial filter used in the identification information groups of the P spatial filters.

In some embodiments, the second indication information is at least one TCI state indication.

In some embodiments, the second reference signal set includes at least one of the following reference signals: an SSB, or a CSI-RS; and/or
the third reference signal set includes at least one of the following reference signals: an SSB, or a CSI-RS.

In some embodiments, the spatial filters include a transmitting spatial filter; or
the spatial filters include a transmitting spatial filter and a receiving spatial filter.

In some embodiments, the communication unit mentioned above may be a communication interface or a transceiver, or an input/output interface of a communication chip or a system on chip; and the processing unit mentioned above may be one or more processors.

It should be understood that the terminal device 300 in accordance with the embodiments of the present disclosure may correspond to the terminal device in the method embodiments of the present disclosure, and the above and other operations and/or functions of each unit in the terminal device 300 are respectively for implementing the corresponding processes of the network device in the method 200 illustrated in FIG. 11, which will not be repeated here for the sake of brevity.

FIG. 19 shows a schematic block diagram of a network device 400 in accordance with the embodiments of the present disclosure. As illustrated in FIG. 19, the network device 400 includes:
a communication unit 410, configured to receive first capability information;
where the first capability information is used for indicating whether a terminal device supports a target type of spatial filter prediction mechanism, and within the target type of spatial filter prediction mechanism, one or more network models are used to perform a spatial-domain group spatial filter prediction.

In some embodiments, the target type of spatial filter prediction mechanism is a first type of spatial filter prediction mechanism, or the target type of spatial filter prediction mechanism is a second type of spatial filter prediction mechanism;
where within the first type of spatial filter prediction mechanism, an input of the network model(s) includes at least one of the following: identification information of spatial filters measured based on a first reference signal set, or link quality information corresponding to the spatial filters measured based on the first reference signal set; and an output of the network model(s) includes at least one of the following: identification information groups of K spatial filters, or link quality information groups corresponding to the K spatial filters; where the identification information groups of the K spatial filters are composed of identification information of K₁ spatial filters predicted in a first prediction data set and identification information of K₂ spatial filters predicted in a second prediction data set, and the link quality information groups corresponding to the K spatial filters are composed of link quality information corresponding to the K₁ spatial filters predicted in the first prediction data set and link quality information corresponding to the K₂ spatial filters predicted in the second prediction data set, K, K₁ and K₂ being all positive integers; or
where within the second type of spatial filter prediction mechanism, an input of the network model(s) includes at least one of the following: identification information of spatial filters measured based on a second reference signal set and a third reference signal set, or link quality information corresponding to the spatial filters measured based on the second reference signal set and the third reference signal set; and an output of the network model(s) includes at least one of the following: identification information groups of P spatial filters, or link quality information groups corresponding to the P spatial filters; where the identification information groups of the P spatial filters are composed of identification information of P₁ spatial filters predicted in a third prediction data set and identification information of P₂ spatial filters predicted in a fourth prediction data set, and the link quality information groups corresponding to the P spatial filters are composed of link quality information corresponding to the P₁ spatial filters predicted in the third prediction data set and link quality information corresponding to the P₂ spatial filters predicted in the fourth prediction data set, P, P₁ and P₂ being all positive integers.

In some embodiments, within the first type of spatial filter prediction mechanism, K = K₁×K₂; or
within the second type of spatial filter prediction mechanism, P= P₁×P₂.

In some embodiments, within the first type of spatial filter prediction mechanism, the first prediction data set and the second prediction data set correspond to different base stations or transmission reception points (TRPs); or
within the second type of spatial filter prediction mechanism, the third prediction data set and the fourth prediction data set correspond to different base stations or TRPs.

In some embodiments, within the first type of spatial filter prediction mechanism, the first reference signal set and the first prediction data set correspond to a same base station or TRP, and the first reference signal set and the second prediction data set correspond to different base stations or TRPs; or
within the second type of spatial filter prediction mechanism, the second reference signal set and the third prediction data set correspond to a same base station or TRP, and the third reference signal set and the fourth prediction data set correspond to a same base station or TRP.

In some embodiments, within the first type of spatial filter prediction mechanism, the spatial filters measured based on the first reference signal set are the same as spatial filters in the first prediction data set, or the spatial filters measured based on the first reference signal set are a subset of the spatial filters in the first prediction data set, or each of the spatial filters measured based on the first reference signal set meets a spatial-domain Quasi-Co-Located (QCL) relation with multiple ones of the spatial filters in the first prediction data set; or
within the second type of spatial filter prediction mechanism, the spatial filters measured based on the second reference signal set are the same as spatial filters in the third prediction data set, or the spatial filters measured based on the third reference signal set are the same as spatial filters in the fourth prediction data set, or the spatial filters measured based on the second reference signal set are a subset of the spatial filters in the third prediction data set, or the spatial filters measured based on the third reference signal set are a subset of the spatial filters in the fourth prediction data set, or each of the spatial filters measured based on the second reference signal set meets a spatial-domain QCL relation with multiple ones of the spatial filters in the third prediction data set, or each of the spatial filters measured based on the third reference signal set meets a spatial-domain QCL relation with multiple ones of the spatial filters in the fourth prediction data set.

In some embodiments, within the first type of spatial filter prediction mechanism, an identification information group of an optimal spatial filter among the identification information groups of the K spatial filters is a combination of a first spatial filter and a second spatial filter; where the first spatial filter is a spatial filter with the highest link quality information corresponding thereto among the K₁ spatial filters, and the second spatial filter is a spatial filter with the highest link quality information among spatial filters that are allowed to be received by the terminal device simultaneously with the first spatial filter among the K₂ spatial filters; or the first spatial filter is a spatial filter with the highest link quality information among spatial filters that are allowed to be received by the terminal device simultaneously among the K₁ spatial filters, and the second spatial filter is a spatial filter with the highest link quality information among spatial filters that are allowed to be received by the terminal device simultaneously among the K₂ spatial filters; or
within the second type of spatial filter prediction mechanism, an identification information group of an optimal spatial filter among the identification information groups of the P spatial filters is a combination of a third spatial filter and a fourth spatial filter; where the third spatial filter is a spatial filter with the highest link quality information corresponding thereto among the P₁ spatial filters, and the fourth spatial filter is a spatial filter with the highest link quality information among spatial filters that are allowed to be received by the terminal device simultaneously with the third spatial filter among the P₂ spatial filters; or the third spatial filter is a spatial filter with the highest link quality information among spatial filters that are allowed to be received by the terminal device simultaneously among the P₁ spatial filters, and the fourth spatial filter is a spatial filter with the highest link quality information among spatial filters that are allowed to be received by the terminal device simultaneously among the P₂ spatial filters.

In some embodiments, in a case where the target type of spatial filter prediction mechanism is the first type of spatial filter prediction mechanism and the terminal device performs a spatial filter prediction, the first capability information further includes at least one of the following:
a maximum number of reference signal resources included in the first reference signal set and supported by the terminal device;
a maximum number of spatial filters included in the first prediction data set and supported by the terminal device;
a maximum number of spatial filters included in the second prediction data set and supported by the terminal device;
a maximum value of K supported by the terminal device;
a number of receiving spatial filters of the terminal device; or
a number of receiving antenna panels of the terminal device.

In some embodiments, the communication unit 410 is further configured to transmit first information;
where the first information is used for configuring at least one of the following: the first reference signal set, the first prediction data set, or the second prediction data set; or the first information is used for activating at least one of the following: one first reference signal set among a pre-configured plurality of first reference signal sets, one first prediction data set among a pre-configured plurality of first prediction data sets, or one second prediction data set among a pre-configured plurality of second prediction data sets.

In some embodiments, the communication unit 410 is further configured to receive first prediction information;
where the first prediction information includes at least one of the following: the identification information groups of the K spatial filters, and the link quality information groups corresponding to the K spatial filters.

In some embodiments, link quality information in the link quality information groups corresponding to the K spatial filters is represented in a differential manner.

In some embodiments, in a case where the target type of spatial filter prediction mechanism is the first type of spatial filter prediction mechanism and the network device performs a spatial filter prediction, the first capability information further includes at least one of the following:
a maximum number of reference signal resources included in the first reference signal set and supported by the terminal device;
a maximum number of pieces of identification information of spatial filters supporting reporting and/or a maximum number of pieces of link quality information corresponding to the spatial filters in one measurement result report of the terminal device;
a number of receiving spatial filters of the terminal device; or
a number of receiving antenna panels of the terminal device.

In some embodiments, the communication unit 410 is further configured to transmit second information;
where the second information is used for configuring the first reference signal set, or the second information is used for activating one first reference signal set from a pre-configured plurality of first reference signal sets.

In some embodiments, the communication unit 410 is further configured to receive a measurement result of the first reference signal set;
where the measurement result of the first reference signal set includes at least one of the following: identification information of the spatial filters measured based on the first reference signal set, or link quality information corresponding to the spatial filters measured based on the first reference signal set.

In some embodiments, the link quality information corresponding to the spatial filters measured based on the first reference signal set is represented in a differential manner.

In some embodiments, the network device 400 further includes: a processing unit 420; where the processing unit 420 is configured to input the measurement result of the first reference signal set into a seventh network model, and output the identification information groups of the K spatial filters and/or the link quality information groups corresponding to the K spatial filters;
where the seventh network model is a network model that meets the first type of spatial filter prediction mechanism.

In some embodiments, the seventh network model is determined by the network device, or the seventh network model is determined and indicated by the terminal device.

In some embodiments, the network device 400 further includes: a processing unit 420; where the processing unit 420 is configured to input the measurement result of the first reference signal set into an eighth network model, and output the identification information groups of the K spatial filters; and the processing unit 420 is configured to input the measurement result of the first reference signal set into a ninth network model, and output the link quality information groups corresponding to the K spatial filters;
where the eighth network model and the ninth network model are network models that meet the first type of spatial filter prediction mechanism.

In some embodiments, the eighth network model is configured or indicated by the network device, or the eighth network model is determined by the terminal device; and/or the ninth network model is configured or indicated by the network device, or the ninth network model is determined by the terminal device.

In some embodiments, the communication unit 410 is further configured to transmit first indication information; where the first indication information is used for indicating a predicted identification information group of a spatial filter used in the identification information groups of the K spatial filters.

In some embodiments, the first indication information is at least one transmission configuration indicator TCI state indication.

In some embodiments, the first reference signal set includes at least one of the following reference signals:
a synchronization signal block (SSB), or a channel state information reference signal (CSI-RS).

In some embodiments, in a case where the target type of spatial filter prediction mechanism is the second type of spatial filter prediction mechanism and the terminal device performs a spatial filter prediction, the first capability information further includes at least one of the following:
a maximum number of reference signal resources included in the second reference signal set and supported by the terminal device;
a maximum number of reference signal resources included in the third reference signal set and supported by the terminal device;
a maximum number of spatial filters included in the third prediction data set and supported by the terminal device;
a maximum number of spatial filters included in the fourth prediction data set and supported by the terminal device;
a maximum value of P supported by the terminal device;
a number of receiving spatial filters of the terminal device; or
a number of receiving antenna panels of the terminal device.

In some embodiments, the communication unit 410 is further configured to transmit third information;
where the third information is used for configuring at least one of the following: the second reference signal set, the third reference signal set, the third prediction data set, or the fourth prediction data set; or
the third information is used for activating at least one of the following: one second reference signal set among a pre-configured plurality of second reference signal sets, one third reference signal set among a pre-configured plurality of third reference signal sets, one third prediction data set among a pre-configured plurality of third prediction data sets, or one fourth prediction data set among a pre-configured plurality of fourth prediction data sets.

In some embodiments, the communication unit 410 is further configured to receive second prediction information;
where the second prediction information includes at least one of the following: the identification information groups of the P spatial filters, or the link quality information groups corresponding to the P spatial filters.

In some embodiments, link quality information in the link quality information groups corresponding to the P spatial filters is represented in a differential manner.

In some embodiments, in a case where the target type of spatial filter prediction mechanism is the second type of spatial filter prediction mechanism and the network device performs a spatial filter prediction, the first capability information further includes at least one of the following:
a maximum number of reference signal resources included in the first reference signal set and supported by the terminal device;
a maximum number of reference signal resources included in the second reference signal set and supported by the terminal device;
a maximum number of pieces of identification information of spatial filters supporting reporting and/or a maximum number of pieces of link quality information corresponding to the spatial filters in one measurement result report of the terminal device;
a number of receiving spatial filters of the terminal device; or
a number of receiving antenna panels of the terminal device.

In some embodiments, the communication unit 410 is further configured to transmit fourth information;
where the fourth information is used for configuring the second reference signal set and the third reference signal set; or the fourth information is used for activating one second reference signal set from a pre-configured plurality of second reference signal sets, and for activating one third reference signal set from a pre-configured plurality of third reference signal sets.

In some embodiments, the communication unit 410 is further configured to receive a measurement result of the second reference signal set and a measurement result of the third reference signal set;
where the measurement result of the second reference signal set includes at least one of the following: the identification information of the spatial filters measured based on the second reference signal set, or the link quality information corresponding to the spatial filters measured based on the second reference signal set;
where the measurement result of the third reference signal set includes at least one of the following: the identification information of the spatial filters measured based on the third reference signal set, or the link quality information corresponding to the spatial filters measured based on the third reference signal set.

In some embodiments, the link quality information corresponding to the spatial filters measured based on the second reference signal set is represented in a differential manner, and/or the link quality information corresponding to the spatial filters measured based on the third reference signal set is represented in a differential manner.

In some embodiments, the network device 400 further includes: a processing unit 420; where the processing unit 420 is configured to input the measurement result of the second reference signal set and the measurement result of the third reference signal set into a tenth network model, and output the identification information groups of the P spatial filters and/or the link quality information groups corresponding to the P spatial filters;
where the tenth network model is a network model that meets the second type of spatial filter prediction mechanism.

In some embodiments, the tenth network model is determined by the network device, or the tenth network model is determined and indicated by the terminal device.

In some embodiments, the network device 400 further includes: a processing unit 420; where the processing unit 420 is configured to input the measurement result of the second reference signal set and the measurement result of the third reference signal set into an eleventh network model, and output the identification information groups of the P spatial filters; and the processing unit 420 is configured to input the measurement result of the second reference signal set and the measurement result of the third reference signal set into a twelfth network model, and output the link quality information groups corresponding to the P spatial filters;
where the eleventh network model and the twelfth network model are network models that meet the second type of spatial filter prediction mechanism.

In some embodiments, the eleventh network model is determined by the network device, or the eleventh network model is determined and indicated by the terminal device; and/or the twelfth network model is determined by the network device, or the twelfth network model is determined and indicated by the terminal device.

In some embodiments, the communication unit 410 is further configured to transmit second indication information; where the second indication information is used for indicating a predicted identification information group of a spatial filter used in the identification information groups of the P spatial filters.

In some embodiments, the second indication information is at least one TCI state indication.

In some embodiments, the second reference signal set includes at least one of the following reference signals: an SSB, or a CSI-RS; and/or
the third reference signal set includes at least one of the following reference signals: an SSB, or a CSI-RS.

In some embodiments, the spatial filters include a transmitting spatial filter; or
the spatial filters include a transmitting spatial filter and a receiving spatial filter.

In some embodiments, the communication unit mentioned above may be a communication interface or a transceiver, or an input/output interface of a communication chip or a system on chip; and the processing unit mentioned above may be one or more processors.

It should be understood that the network device 400 in accordance with the embodiments of the present disclosure may correspond to the network device in the method embodiments of the present disclosure, and the above and other operations and/or functions of each unit in the network device 400 are respectively for implementing the corresponding processes performed by the network device in the method 200 illustrated in FIG. 11, which will not be repeated here for the sake of brevity.

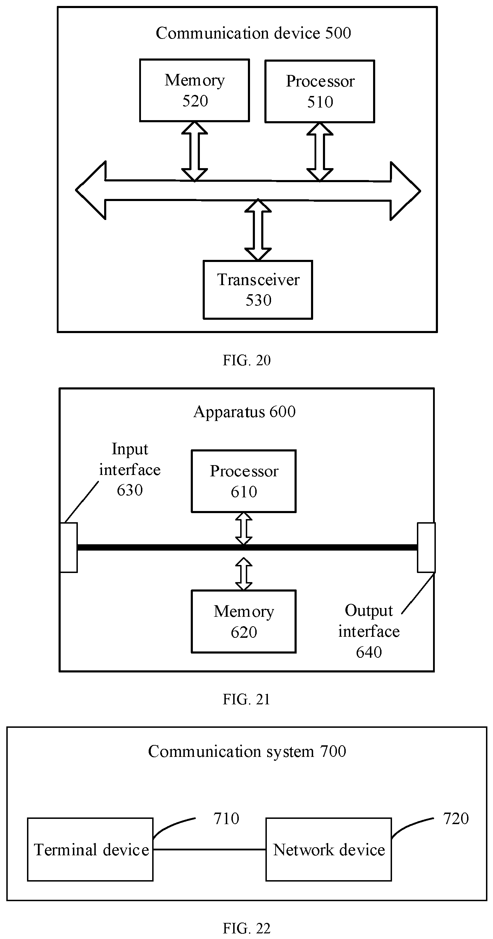

FIG. 20 is a schematic structural diagram of a communication device 500 provided in the embodiments of the present disclosure. The communication device 500 illustrated in FIG. 20 includes a processor 510. The processor 510 may call a computer program from a memory and run the computer program, to implement the methods in the embodiments of the present disclosure.

In some embodiments, as illustrated in FIG. 20, the communication device 500 may further include a memory 520. The processor 510 may call a computer program from the memory 520 and run the computer program, to implement the methods in the embodiments of the present disclosure.

The memory 520 may be a separate device independent of the processor 510, or may be integrated into the processor 510.

In some embodiments, as illustrated in FIG. 20, the communication device 500 may further include a transceiver 530. The processor 510 may control the transceiver 530 to communicate with other devices, and specifically, may control the transceiver 530 to transmit information or data to other devices, or receive information or data transmitted by other devices.

The transceiver 530 may include a transmitter and a receiver. The transceiver 530 may further include antenna(s), and the number of the antenna(s) may be one or more.

In some embodiments, the processor 510 may implement the functions of a processing unit in the terminal device, or the processor 510 may implement the functions of a processing unit in the network device, which will not be described in detail here for the sake of brevity.

In some embodiments, the transceiver 530 may implement the functions of a communication unit in the terminal device, which will not be repeated here for the sake of brevity.

In some embodiments, the transceiver 530 may implement the functions of a communication unit in the network device, which will not be repeated here for the sake of brevity.

In some embodiments, the communication device 500 may specifically be the network device in the embodiments of the present disclosure, and the communication device 500 may implement the corresponding processes implemented by the network device in each method in the embodiments of the present disclosure, which will not be repeated here for the sake of brevity.

In some embodiments, the communication device 500 may specifically be the terminal device in the embodiments of the present disclosure, and the communication device 500 may implement the corresponding processes implemented by the terminal device in each method in the embodiments of the present disclosure, which will not be repeated here for the sake of brevity.

FIG. 21 is a schematic structural diagram of an apparatus in the embodiments of the present disclosure. The apparatus 600 illustrated in FIG. 21 includes a processor 610. The processor 610 may call a computer program from a memory and run the computer program, to implement the methods in the embodiments of the present disclosure.

In some embodiments, as illustrated in FIG. 21, the apparatus 600 may further include a memory 620. The processor 610 may call a computer program from the memory 620 and run the computer program, to implement the methods in the embodiments of the present disclosure.

The memory 620 may be a separate device independent of the processor 610, or may be integrated into the processor 610.

In some embodiments, the apparatus 600 may further include an input interface 630. The processor 610 may control the input interface 630 to communicate with other devices or chips, and specifically, may control the input interface 630 to acquire information or data transmitted by other devices or chips. Optionally, the processor 610 may be integrated into a chip or independent of a chip.

In some embodiments, the processor 610 may implement the functions of a processing unit in the terminal device, or the processor 610 may implement the functions of a processing unit in the network device, which will not be repeated here for the sake of brevity.

In some embodiments, the input interface 630 may implement the functions of a communication unit in the terminal device, or the input interface 630 may implement the functions of a communication unit in the network device.

In some embodiments, the apparatus 600 may further include an output interface 640. The processor 610 may control the output interface 640 to communicate with other devices or chips, and specifically, may control the output interface 640 to output information or data to other devices or chips. Optionally, the processor 610 may be integrated into a chip or independent of a chip.

In some embodiments, the output interface 640 may implement the functions of a communication unit in the terminal device, or the output interface 640 may implement the functions of a communication unit in the network device.

In some embodiments, the apparatus may be applied to the network device in the embodiments of the present disclosure, and the apparatus may implement the corresponding processes implemented by the network device in the various methods in the embodiments of the present disclosure, which will not be repeated here for the sake of brevity.

In some embodiments, the apparatus may be applied to the terminal device in the embodiments of the present disclosure, and the apparatus may implement the corresponding processes implemented by the terminal device in the various methods in the embodiments of the present disclosure, which will not be repeated here for the sake of brevity.

In some embodiments, the apparatus mentioned in the embodiments of the present disclosure may also be a chip. For example, it may be a system-level chip, a system chip, a chip system, or a system-on-chip.

FIG. 22 is a schematic block diagram of a communication system 700 provided in the embodiments of the present disclosure. As illustrated in FIG. 22, the communication system 700 includes a terminal device 710 and a network device 720.

The terminal device 710 may be configured to implement the corresponding functions implemented by the terminal device in the above method, and the network device 720 may be configured to implement the corresponding functions implemented by the network device in the above method, which will not be repeated here for the sake of brevity.

It should be understood that the processor in the embodiments of the present disclosure may be an integrated circuit chip with signal processing capabilities. In the implementation process, each step of the above method embodiments can be completed by an integrated logic circuit of hardware in a processor or an instruction in software form. The above-mentioned processor may be a general-purpose processor, a digital signal processor (DSP), an application-specific integrated circuit (ASIC), a field programmable gate array (FPGA) or other programmable logic devices, a discrete gate or transistor logic device, or a discrete hardware component. The various methods, steps and logic diagrams disclosed in the embodiments of the present disclosure may be implemented or executed. A general-purpose processor may be a microprocessor, or the processor may be any conventional processor or the like. The steps of the method disclosed in the embodiments of the present disclosure may be directly implemented as being executed by a hardware decoding processor, or may be implemented by a combination of hardware and software modules in the decoding processor. The software module may be located in a random access memory, a flash memory, a read-only memory, a programmable read-only memory, an electrically erasable programmable memory, a register, or other mature storage media in the art. The storage medium is located in the memory, and the processor reads the information in the memory and completes the steps of the above method in combination with its hardware.

It can be understood that the memory in the embodiments of the present disclosure may be a volatile (transitory) memory or a non-volatile (non-transitory) memory, or may include both volatile and non-volatile memories. Among them, the non-volatile memory may be a read-only memory (ROM), a programmable read-only memory (PROM), an erasable programmable read-only memory (Erasable PROM, EPROM), an electrically erasable programmable read-only memory (Electrically EPROM, EEPROM), or a flash memory. The volatile memory may be a random access memory (RAM), which acts as an external cache memory. By way of example and not limitation, many forms of RAM are available, such as a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM), and a direct memory bus random access memory (Direct Rambus RAM, DR RAM). It will be noted that memories of the systems and methods described herein are intended to include, without being limited to, these and any other suitable types of memories.

It should be understood that the above memories are exemplary but not restrictive. For example, the memories in the embodiments of the present disclosure may be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synch link DRAM, SLDRAM), and a direct memory bus random access memory (Direct Rambus RAM, DR RAM). That is, the memories in the embodiments of the present disclosure are intended to include but are not limited to these and any other suitable types of memories.

The embodiments of the present disclosure further provide a computer-readable storage medium configured to store a computer program.

In some embodiments, the computer-readable storage medium may be applied to the network device in the embodiments of the present disclosure, and the computer program enables a computer to perform the corresponding processes implemented by the network device in the various methods in the embodiments of the present disclosure, which will not be repeated here for the sake of brevity.

In some embodiments, the computer-readable storage medium may be applied to the terminal device in the embodiments of the present disclosure, and the computer program enables a computer to perform the corresponding processes implemented by the terminal device in the various methods in the embodiments of the present disclosure, which will not be repeated here for the sake of brevity.

The embodiments of the present disclosure further provide a computer program product, including computer program instructions.

In some embodiments, the computer program product may be applied to the network device in the embodiments of the present disclosure, and the computer program instructions enable a computer to perform the corresponding processes implemented by the network device in the various methods in the embodiments of the present disclosure, which will not be repeated here for the sake of brevity.

In some embodiments, the computer program product may be applied to the terminal device in the embodiments of the present disclosure, and the computer program instructions enable a computer to perform the corresponding processes implemented by the terminal device in the various methods in the embodiments of the present disclosure, which will not be repeated here for the sake of brevity.

The embodiments of the present disclosure further provide a computer program.

In some embodiments, the computer program may be applied to the network device in the embodiments of the present disclosure. When executed on a computer, the computer program enables the computer to perform the corresponding processes implemented by the network device in the various methods in the embodiments of the present disclosure, which will not be repeated here for the sake of brevity.

In some embodiments, the computer program may be applied to the terminal device in the embodiments of the present disclosure. When executed on a computer, the computer program enables the computer to perform the corresponding processes implemented by the terminal device in the various methods of the embodiments of the present disclosure, which will not be repeated here for the sake of brevity.

Those skilled in the art will appreciate that the units and algorithm steps of each example described in conjunction with the embodiments disclosed herein may be implemented by electronic hardware, or a combination of computer software and electronic hardware. Whether these functions are performed in hardware or software depends on the specific application and design constraints of the technical solution. Professional technicians may use different methods to implement the described functions for each specific disclosure, but such implementation should not be considered to be beyond the scope of the present disclosure.

Those skilled in the art can clearly understand that, for the convenience and brevity of description, the specific working processes of the systems, devices/apparatuses and units described above can refer to the corresponding processes in the aforementioned method embodiments and will not be repeated here.

In several embodiments provided in the present disclosure, it should be understood that the disclosed systems, devices/apparatuses and methods may be implemented in other ways. For example, the device/apparatus embodiments described above are merely illustrative. For example, the division of the units is merely a logical function division. There may be other division methods in actual implementations. For example, multiple units or components may be combined or integrated into another system, or some features may be ignored or not executed. Another point is that the mutual coupling or direct coupling or communication connection shown or discussed may be an indirect coupling or communication connection through some interfaces, devices or units, which may be electrical, mechanical or in other forms.

The units described as separate components may or may not be physically separated, and the components shown as units may or may not be physical units, that is, they may be located in one place or distributed over multiple network units. Some or all of the units may be selected according to actual needs to achieve the purpose of the solution of the embodiments.

In addition, various functional units in each embodiment of the present disclosure may be integrated into one processing unit, or each unit may exist physically separately, or two or more units may be integrated into one unit.

If implemented in the form of software functional units and sold or used as independent products, the functions may be stored in a computer-readable storage medium. Based on such an understanding, the technical solution of the present disclosure may essentially be embodied in the form of a software product, or the part that contributes to the prior art, or the part of the technical solution. The computer software product is stored in a storage medium and includes some instructions for enabling a computer device (which may be a personal computer, a server, or a network device) to perform all or part of the steps of the method described in each embodiment of the present disclosure. The aforementioned storage media include: a U disk, a mobile hard disk, a read-only memory (ROM), a random access memory (RAM), a disk or optical disk, and other media that can store program codes.

The foregoing descriptions are merely specific implementations of the present disclosure, but the protection scope of the present disclosure is not limited thereto. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. A wireless communication method, comprising:
transmitting, by a terminal device, first capability information;
wherein the first capability information is used for indicating whether the terminal device supports a target type of spatial filter prediction mechanism, and within the target type of spatial filter prediction mechanism, one or more network models are used to perform a spatial-domain group spatial filter prediction.

2. The method according to claim 1, wherein the target type of spatial filter prediction mechanism is a first type of spatial filter prediction mechanism, or the target type of spatial filter prediction mechanism is a second type of spatial filter prediction mechanism;
wherein within the first type of spatial filter prediction mechanism, an input of the network model(s) includes at least one of following: identification information of spatial filters measured based on a first reference signal set, or link quality information corresponding to the spatial filters measured based on the first reference signal set; and an output of the network model(s) includes at least one of following: identification information groups of K spatial filters, or link quality information groups corresponding to the K spatial filters; wherein the identification information groups of the K spatial filters are composed of identification information of K₁ spatial filters predicted in a first prediction data set and identification information of K₂ spatial filters predicted in a second prediction data set, and the link quality information groups corresponding to the K spatial filters are composed of link quality information corresponding to the K₁ spatial filters predicted in the first prediction data set and link quality information corresponding to the K₂ spatial filters predicted in the second prediction data set, K, K₁ and K₂ being all positive integers; or
within the second type of spatial filter prediction mechanism, an input of the network model(s) includes at least one of following: identification information of spatial filters measured based on a second reference signal set and a third reference signal set, or link quality information corresponding to the spatial filters measured based on the second reference signal set and the third reference signal set; and an output of the network model(s) includes at least one of following: identification information groups of P spatial filters, or link quality information groups corresponding to the P spatial filters; wherein the identification information groups of the P spatial filters are composed of identification information of P₁ spatial filters predicted in a third prediction data set and identification information of P₂ spatial filters predicted in a fourth prediction data set, and the link quality information groups corresponding to the P spatial filters are composed of link quality information corresponding to the P₁ spatial filters predicted in the third prediction data set and link quality information corresponding to the P₂ spatial filters predicted in the fourth prediction data set, P, P₁ and P₂ being all positive integers.

3. The method according to claim 2, wherein
within the first type of spatial filter prediction mechanism, K ≤ K₁×K₂; or
within the second type of spatial filter prediction mechanism, P ≤ P₁×P₂.

4. The method according to claim 2 or 3, wherein
within the first type of spatial filter prediction mechanism, the first prediction data set and the second prediction data set correspond to different base stations or transmission reception points (TRPs); or
within the second type of spatial filter prediction mechanism, the third prediction data set and the fourth prediction data set correspond to different base stations or TRPs.

5. The method according to any one of claims 2 to 4, wherein
within the first type of spatial filter prediction mechanism, the first reference signal set and the first prediction data set correspond to a same base station or TRP, and the first reference signal set and the second prediction data set correspond to different base stations or TRPs; or
within the second type of spatial filter prediction mechanism, the second reference signal set and the third prediction data set correspond to a same base station or TRP, and the third reference signal set and the fourth prediction data set correspond to a same base station or TRP.

6. The method according to any one of claims 2 to 5, wherein
within the first type of spatial filter prediction mechanism, the spatial filters measured based on the first reference signal set are same as spatial filters in the first prediction data set, or the spatial filters measured based on the first reference signal set are a subset of the spatial filters in the first prediction data set, or each of the spatial filters measured based on the first reference signal set meets a spatial-domain Quasi-Co-Located (QCL) relation with multiple ones of the spatial filters in the first prediction data set; or
within the second type of spatial filter prediction mechanism, the spatial filters measured based on the second reference signal set are same as spatial filters in the third prediction data set, or the spatial filters measured based on the third reference signal set are same as spatial filters in the fourth prediction data set, or the spatial filters measured based on the second reference signal set are a subset of the spatial filters in the third prediction data set, or the spatial filters measured based on the third reference signal set are a subset of the spatial filters in the fourth prediction data set, or each of the spatial filters measured based on the second reference signal set meets a spatial-domain QCL relation with multiple ones of the spatial filters in the third prediction data set, or each of the spatial filters measured based on the third reference signal set meets a spatial-domain QCL relation with multiple ones of the spatial filters in the fourth prediction data set.

7. The method according to any one of claims 2 to 6, wherein
within the first type of spatial filter prediction mechanism, an identification information group of an optimal spatial filter among the identification information groups of the K spatial filters is a combination of a first spatial filter and a second spatial filter; wherein the first spatial filter is a spatial filter with highest link quality information corresponding thereto among the K₁ spatial filters, and the second spatial filter is a spatial filter with highest link quality information among spatial filters that are allowed to be received by the terminal device simultaneously with the first spatial filter among the K₂ spatial filters; or the first spatial filter is a spatial filter with highest link quality information among spatial filters that are allowed to be received by the terminal device simultaneously among the K₁ spatial filters, and the second spatial filter is a spatial filter with highest link quality information among spatial filters that are allowed to be received by the terminal device simultaneously among the K₂ spatial filters; or
within the second type of spatial filter prediction mechanism, an identification information group of an optimal spatial filter among the identification information groups of the P spatial filters is a combination of a third spatial filter and a fourth spatial filter; wherein the third spatial filter is a spatial filter with highest link quality information corresponding thereto among the P₁ spatial filters, and the fourth spatial filter is a spatial filter with highest link quality information among spatial filters that are allowed to be received by the terminal device simultaneously with the third spatial filter among the P₂ spatial filters; or the third spatial filter is a spatial filter with highest link quality information among spatial filters that are allowed to be received by the terminal device simultaneously among the P₁ spatial filters, and the fourth spatial filter is a spatial filter with highest link quality information among spatial filters that are allowed to be received by the terminal device simultaneously among the P₂ spatial filters.

8. The method according to any one of claims 2 to 7, wherein in a case where the target type of spatial filter prediction mechanism is the first type of spatial filter prediction mechanism and the terminal device performs a spatial filter prediction, the first capability information further comprises at least one of following:
a maximum number of reference signal resources included in the first reference signal set and supported by the terminal device;
a maximum number of spatial filters included in the first prediction data set and supported by the terminal device;
a maximum number of spatial filters included in the second prediction data set and supported by the terminal device;
a maximum value of K supported by the terminal device;
a number of receiving spatial filters of the terminal device; or
a number of receiving antenna panels of the terminal device.

9. The method according to claim 8, wherein the method further comprises:
receiving, by the terminal device, first information;
wherein the first information is used for configuring at least one of following: the first reference signal set, the first prediction data set, or the second prediction data set; or
the first information is used for activating at least one of following: one first reference signal set among a pre-configured plurality of first reference signal sets, one first prediction data set among a pre-configured plurality of first prediction data sets, or one second prediction data set among a pre-configured plurality of second prediction data sets.

10. The method according to claim 9, wherein the method further comprises:
inputting, by the terminal device, a first measurement data set into a first network model, and outputting, by the terminal device, the identification information groups of the K spatial filters and/or the link quality information groups corresponding to the K spatial filters;
wherein the first network model is a network model that meets the first type of spatial filter prediction mechanism; and
the first measurement data set comprises at least one of following: the identification information of the spatial filters measured based on the first reference signal set, or the link quality information corresponding to the spatial filters measured based on the first reference signal set.

11. The method according to claim 10, wherein the first network model is configured or indicated by a network device, or the first network model is determined by the terminal device.

12. The method according to claim 9, wherein the method further comprises:
inputting, by the terminal device, a first measurement data set into a second network model, and outputting, by the terminal device, the identification information groups of the K spatial filters; and inputting, by the terminal device, the first measurement data set into a third network model, and outputting, by the terminal device, the link quality information groups corresponding to the K spatial filters;
wherein the second network model and the third network model are network models that meet the first type of spatial filter prediction mechanism; and the first measurement data set comprises at least one of following: the identification information of the spatial filters measured based on the first reference signal set, or the link quality information corresponding to the spatial filters measured based on the first reference signal set.

13. The method according to claim 12, wherein
the second network model is configured or indicated by a network device, or the second network model is determined by the terminal device; and/or
the third network model is configured or indicated by the network device, or the third network model is determined by the terminal device.

14. The method according to any one of claims 10 to 13, wherein the method further comprises:
transmitting, by the terminal device, first prediction information;
wherein the first prediction information comprises at least one of following: the identification information groups of the K spatial filters, or the link quality information groups corresponding to the K spatial filters.

15. The method according to claim 14, wherein link quality information in the link quality information groups corresponding to the K spatial filters is represented in a differential manner.

16. The method according to any one of claims 2 to 7, wherein in a case where the target type of spatial filter prediction mechanism is the first type of spatial filter prediction mechanism and the terminal device does not perform a spatial filter prediction, the first capability information further comprises at least one of following:
a maximum number of reference signal resources included in the first reference signal set and supported by the terminal device;
a maximum number of pieces of identification information of spatial filters supporting reporting and/or a maximum number of pieces of link quality information corresponding to the spatial filters in one measurement result report of the terminal device;
a number of receiving spatial filters of the terminal device; or
a number of receiving antenna panels of the terminal device.

17. The method according to claim 16, wherein the method further comprises:
receiving, by the terminal device, second information;
wherein the second information is used for configuring the first reference signal set, or the second information is used for activating one first reference signal set from a pre-configured plurality of first reference signal sets.

18. The method according to claim 17, wherein the method further comprises:
transmitting, by the terminal device, a measurement result of the first reference signal set;
wherein the measurement result of the first reference signal set comprises at least one of following: the identification information of the spatial filters measured based on the first reference signal set, or the link quality information corresponding to the spatial filters measured based on the first reference signal set.

19. The method according to claim 18, wherein link quality information corresponding to the spatial filters measured based on the first reference signal set is represented in a differential manner.

20. The method according to any one of claims 8 to 19, wherein the method further comprises:
receiving, by the terminal device, first indication information; wherein the first indication information is used for indicating a predicted identification information group of a spatial filter used in the identification information groups of the K spatial filters.

21. The method according to claim 20, wherein the first indication information is at least one transmission configuration indicator (TCI) state indication.

22. The method according to any one of claims 8 to 21, wherein the first reference signal set comprises at least one of following reference signals:
a synchronization signal block (SSB), or a channel state information reference signal (CSI-RS).

23. The method according to any one of claims 2 to 7, wherein in a case where the target type of spatial filter prediction mechanism is the second type of spatial filter prediction mechanism and the terminal device performs a spatial filter prediction, the first capability information further comprises at least one of following:
a maximum number of reference signal resources included in the second reference signal set and supported by the terminal device;
a maximum number of reference signal resources included in the third reference signal set and supported by the terminal device;
a maximum number of spatial filters included in the third prediction data set and supported by the terminal device;
a maximum number of spatial filters included in the fourth prediction data set and supported by the terminal device;
a maximum value of P supported by the terminal device;
a number of receiving spatial filters of the terminal device; or
a number of receiving antenna panels of the terminal device.

24. The method according to claim 23, wherein the method further comprises:
receiving, by the terminal device, third information;
wherein the third information is used for configuring at least one of following: the second reference signal set, the third reference signal set, the third prediction data set, or the fourth prediction data set; or
the third information is used for activating at least one of following: one second reference signal set among a pre-configured plurality of second reference signal sets, one third reference signal set among a pre-configured plurality of third reference signal sets, one third prediction data set among a pre-configured plurality of third prediction data sets, or one fourth prediction data set among a pre-configured plurality of fourth prediction data sets.

25. The method according to claim 24, wherein the method further comprises:
inputting, by the terminal device, a second measurement data set and a third measurement data set into a fourth network model, and outputting, by the terminal device, the identification information groups of the P spatial filters and/or the link quality information groups corresponding to the P spatial filters;
wherein the fourth network model is a network model that meets the second type of spatial filter prediction mechanism;
the second measurement data set comprises at least one of following: the identification information of the spatial filters measured based on the second reference signal set, or the link quality information corresponding to the spatial filters measured based on the second reference signal set; and
the third measurement data set comprises at least one of following: the identification information of the spatial filters measured based on the third reference signal set, or the link quality information corresponding to the spatial filters measured based on the third reference signal set.

26. The method according to claim 25, wherein the fourth network model is configured or indicated by a network device, or the fourth network model is determined by the terminal device.

27. The method according to claim 24, wherein the method further comprises:
inputting, by the terminal device, a second measurement data set and a third measurement data set into a fifth network model, and outputting, by the terminal device, the identification information groups of the P spatial filters; and inputting, by the terminal device, the second measurement data set and the third measurement data set into a sixth network model, and outputting, by the terminal device, the link quality information groups corresponding to the P spatial filters;
wherein the fifth network model and the sixth network model are network models that meet the second type of spatial filter prediction mechanism;
the second measurement data set comprises at least one of following: the identification information of the spatial filters measured based on the second reference signal set, or the link quality information corresponding to the spatial filters measured based on the second reference signal set; and
the third measurement data set comprises at least one of following: the identification information of the spatial filters measured based on the third reference signal set, or the link quality information corresponding to the spatial filters measured based on the third reference signal set.

28. The method according to claim 27, wherein
the fifth network model is configured or indicated by a network device, or the fifth network model is determined by the terminal device; and/or
the sixth network model is configured or indicated by the network device, or the sixth network model is determined by the terminal device.

29. The method according to any one of claims 25 to 28, wherein the method further comprises:
transmitting, by the terminal device, second prediction information;
wherein the second prediction information comprises at least one of following: the identification information groups of the P spatial filters, or the link quality information groups corresponding to the P spatial filters.

30. The method according to claim 29, wherein link quality information in the link quality information groups corresponding to the P spatial filters is represented in a differential manner.

31. The method according to any one of claims 2 to 7, wherein in a case where the target type of spatial filter prediction mechanism is the second type of spatial filter prediction mechanism and the terminal device does not perform a spatial filter prediction, the first capability information further comprises at least one of following:
a maximum number of reference signal resources included in the first reference signal set and supported by the terminal device;
a maximum number of reference signal resources included in the second reference signal set and supported by the terminal device;
a maximum number of pieces of identification information of spatial filters supporting reporting and/or a maximum number of pieces of link quality information corresponding to the spatial filters in one measurement result report of the terminal device;
a number of receiving spatial filters of the terminal device; or
a number of receiving antenna panels of the terminal device.

32. The method according to claim 31, wherein the method further comprises:
receiving, by the terminal device, fourth information;
wherein the fourth information is used for configuring the second reference signal set and the third reference signal set; or the fourth information is used for activating one second reference signal set from a pre-configured plurality of second reference signal sets, and for activating one third reference signal set from a pre-configured plurality of third reference signal sets.

33. The method according to claim 32, wherein the method further comprises:
transmitting, by the terminal device, a measurement result of the second reference signal set and a measurement result of the third reference signal set;
wherein the measurement result of the second reference signal set comprises at least one of following: the identification information of the spatial filters measured based on the second reference signal set, or the link quality information corresponding to the spatial filters measured based on the second reference signal set; and
the measurement result of the third reference signal set comprises at least one of following: the identification information of the spatial filters measured based on the third reference signal set, or the link quality information corresponding to the spatial filters measured based on the third reference signal set.

34. The method according to claim 33, wherein the link quality information corresponding to the spatial filters measured based on the second reference signal set is represented in a differential manner, and/or the link quality information corresponding to the spatial filters measured based on the third reference signal set is represented in a differential manner.

35. The method according to any one of claims 23 to 34, wherein the method further comprises:
receiving, by the terminal device, second indication information; wherein the second indication information is used for indicating a predicted identification information group of a spatial filter used in the identification information groups of the P spatial filters.

36. The method according to claim 35, wherein the second indication information is at least one TCI state indication.

37. The method according to any one of claims 23 to 35, wherein
the second reference signal set comprises at least one of following reference signals: an SSB, or a CSI-RS; and/or
the third reference signal set comprises at least one of following reference signals: an SSB, or a CSI-RS.

38. The method according to any one of claims 1 to 37, wherein
the spatial filters comprise a transmitting spatial filter; or
the spatial filters comprise a transmitting spatial filter and a receiving spatial filter.

39. A wireless communication method, comprising:
receiving, by a network device, first capability information;
wherein the first capability information is used for indicating whether a terminal device supports a target type of spatial filter prediction mechanism, and within the target type of spatial filter prediction mechanism, one or more network models are used to perform a spatial-domain group spatial filter prediction.

40. The method according to claim 39, wherein the target type of spatial filter prediction mechanism is a first type of spatial filter prediction mechanism, or the target type of spatial filter prediction mechanism is a second type of spatial filter prediction mechanism;
wherein within the first type of spatial filter prediction mechanism, an input of the network model(s) includes at least one of following: identification information of spatial filters measured based on a first reference signal set, or link quality information corresponding to the spatial filters measured based on the first reference signal set; and an output of the network model(s) includes at least one of following: identification information groups of K spatial filters, or link quality information groups corresponding to the K spatial filters; wherein the identification information groups of the K spatial filters are composed of identification information of K₁ spatial filters predicted in a first prediction data set and identification information of K₂ spatial filters predicted in a second prediction data set, and the link quality information groups corresponding to the K spatial filters are composed of link quality information corresponding to the K₁ spatial filters predicted in the first prediction data set and link quality information corresponding to the K₂ spatial filters predicted in the second prediction data set, K, K₁ and K₂ being all positive integers; or
within the second type of spatial filter prediction mechanism, an input of the network model(s) includes at least one of following: identification information of spatial filters measured based on a second reference signal set and a third reference signal set, or link quality information corresponding to the spatial filters measured based on the second reference signal set and the third reference signal set; and an output of the network model(s) includes at least one of following: identification information groups of P spatial filters, or link quality information groups corresponding to the P spatial filters; wherein the identification information groups of the P spatial filters are composed of identification information of P₁ spatial filters predicted in a third prediction data set and identification information of P₂ spatial filters predicted in a fourth prediction data set, and the link quality information groups corresponding to the P spatial filters are composed of link quality information corresponding to the P₁ spatial filters predicted in the third prediction data set and link quality information corresponding to the P₂ spatial filters predicted in the fourth prediction data set, P, P₁ and P₂ being all positive integers.

41. The method according to claim 40, wherein
within the first type of spatial filter prediction mechanism, K = K₁×K₂; or
within the second type of spatial filter prediction mechanism, P= P₁×P₂.

42. The method according to claim 40 or 41, wherein
within the first type of spatial filter prediction mechanism, the first prediction data set and the second prediction data set correspond to different base stations or transmission reception points (TRPs); or
within the second type of spatial filter prediction mechanism, the third prediction data set and the fourth prediction data set correspond to different base stations or TRPs.

43. The method according to any one of claims 40 to 42, wherein
within the first type of spatial filter prediction mechanism, the first reference signal set and the first prediction data set correspond to a same base station or TRP, and the first reference signal set and the second prediction data set correspond to different base stations or TRPs; or
within the second type of spatial filter prediction mechanism, the second reference signal set and the third prediction data set correspond to a same base station or TRP, and the third reference signal set and the fourth prediction data set correspond to a same base station or TRP.

44. The method according to any one of claims 40 to 43, wherein
within the first type of spatial filter prediction mechanism, the spatial filters measured based on the first reference signal set are same as spatial filters in the first prediction data set, or the spatial filters measured based on the first reference signal set are a subset of the spatial filters in the first prediction data set, or each of the spatial filters measured based on the first reference signal set meets a spatial-domain Quasi-Co-Located (QCL) relation with multiple ones of the spatial filters in the first prediction data set; or
within the second type of spatial filter prediction mechanism, the spatial filters measured based on the second reference signal set are same as spatial filters in the third prediction data set, or the spatial filters measured based on the third reference signal set are same as spatial filters in the fourth prediction data set, or the spatial filters measured based on the second reference signal set are a subset of the spatial filters in the third prediction data set, or the spatial filters measured based on the third reference signal set are a subset of the spatial filters in the fourth prediction data set, or each of the spatial filters measured based on the second reference signal set meets a spatial-domain QCL relation with multiple ones of the spatial filters in the third prediction data set, or each of the spatial filters measured based on the third reference signal set meets a spatial-domain QCL relation with multiple ones of the spatial filters in the fourth prediction data set.

45. The method according to any one of claims 40 to 44, wherein
within the first type of spatial filter prediction mechanism, an identification information group of an optimal spatial filter among the identification information groups of the K spatial filters is a combination of a first spatial filter and a second spatial filter; wherein the first spatial filter is a spatial filter with highest link quality information corresponding thereto among the K₁ spatial filters, and the second spatial filter is a spatial filter with highest link quality information among spatial filters that are allowed to be received by the terminal device simultaneously with the first spatial filter among the K₂ spatial filters; or the first spatial filter is a spatial filter with highest link quality information among spatial filters that are allowed to be received by the terminal device simultaneously among the K₁ spatial filters, and the second spatial filter is a spatial filter with highest link quality information among spatial filters that are allowed to be received by the terminal device simultaneously among the K₂ spatial filters; or
within the second type of spatial filter prediction mechanism, an identification information group of an optimal spatial filter among the identification information groups of the P spatial filters is a combination of a third spatial filter and a fourth spatial filter; wherein the third spatial filter is a spatial filter with highest link quality information corresponding thereto among the P₁ spatial filters, and the fourth spatial filter is a spatial filter with highest link quality information among spatial filters that are allowed to be received by the terminal device simultaneously with the third spatial filter among the P₂ spatial filters; or the third spatial filter is a spatial filter with highest link quality information among spatial filters that are allowed to be received by the terminal device simultaneously among the P₁ spatial filters, and the fourth spatial filter is a spatial filter with highest link quality information among spatial filters that are allowed to be received by the terminal device simultaneously among the P₂ spatial filters.

46. The method according to any one of claims 40 to 45, wherein in a case where the target type of spatial filter prediction mechanism is the first type of spatial filter prediction mechanism and the terminal device performs a spatial filter prediction, the first capability information further comprises at least one of following:
a maximum number of reference signal resources included in the first reference signal set and supported by the terminal device;
a maximum number of spatial filters included in the first prediction data set and supported by the terminal device;
a maximum number of spatial filters included in the second prediction data set and supported by the terminal device;
a maximum value of K supported by the terminal device;
a number of receiving spatial filters of the terminal device; or
a number of receiving antenna panels of the terminal device.

47. The method according to claim 46, wherein the method further comprises:
transmitting, by the network device, first information;
wherein the first information is used for configuring at least one of following: the first reference signal set, the first prediction data set, or the second prediction data set; or
the first information is used for activating at least one of following: one first reference signal set among a pre-configured plurality of first reference signal sets, one first prediction data set among a pre-configured plurality of first prediction data sets, or one second prediction data set among a pre-configured plurality of second prediction data sets.

48. The method according to claim 47, wherein the method further comprises:
receiving, by the network device, first prediction information;
wherein the first prediction information comprises at least one of following: the identification information groups of the K spatial filters, or the link quality information groups corresponding to the K spatial filters.

49. The method according to claim 48, wherein link quality information in the link quality information groups corresponding to the K spatial filters is represented in a differential manner.

50. The method according to any one of claims 40 to 45, wherein in a case where the target type of spatial filter prediction mechanism is the first type of spatial filter prediction mechanism and the network device performs a spatial filter prediction, the first capability information further comprises at least one of following:
a maximum number of reference signal resources included in the first reference signal set and supported by the terminal device;
a maximum number of pieces of identification information of spatial filters supporting reporting and/or a maximum number of pieces of link quality information corresponding to the spatial filters in one measurement result report of the terminal device;
a number of receiving spatial filters of the terminal device; or
a number of receiving antenna panels of the terminal device.

51. The method according to claim 50, wherein the method further comprises:
transmitting, by the network device, second information;
wherein the second information is used for configuring the first reference signal set, or the second information is used for activating one first reference signal set from a pre-configured plurality of first reference signal sets.

52. The method according to claim 51, wherein the method further comprises:
receiving, by the network device, a measurement result of the first reference signal set;
wherein the measurement result of the first reference signal set comprises at least one of following: the identification information of the spatial filters measured based on the first reference signal set, or the link quality information corresponding to the spatial filters measured based on the first reference signal set.

53. The method according to claim 52, wherein link quality information corresponding to the spatial filters measured based on the first reference signal set is represented in a differential manner.

54. The method according to claim 52 or 53, wherein the method further comprises:
inputting, by the network device, the measurement result of the first reference signal set into a seventh network model, and outputting, by the network device, the identification information groups of the K spatial filters and/or the link quality information groups corresponding to the K spatial filters;
wherein the seventh network model is a network model that meets the first type of spatial filter prediction mechanism.

55. The method according to claim 54, wherein the seventh network model is determined by the network device, or the seventh network model is determined and indicated by the terminal device.

56. The method according to claim 52 or 53, wherein the method further comprises:
inputting, by the network device, the measurement result of the first reference signal set into an eighth network model, and outputting, by the network device, the identification information groups of the K spatial filters; and inputting, by the network device, the measurement result of the first reference signal set into a ninth network model, and outputting, by the network device, the link quality information groups corresponding to the K spatial filters;
wherein the eighth network model and the ninth network model are network models that meet the first type of spatial filter prediction mechanism.

57. The method according to claim 56, wherein
the eighth network model is configured or indicated by the network device, or the eighth network model is determined by the terminal device; and/or
the ninth network model is configured or indicated by the network device, or the ninth network model is determined by the terminal device.

58. The method according to any one of claims 46 to 57, wherein the method further comprises:
transmitting, by the network device, first indication information; wherein the first indication information is used for indicating a predicted identification information group of a spatial filter used in the identification information groups of the K spatial filters.

59. The method according to claim 58, wherein the first indication information is at least one transmission configuration indicator (TCI) state indication.

60. The method according to any one of claims 46 to 59, wherein the first reference signal set comprises at least one of following reference signals:
a synchronization signal block (SSB), or a channel state information reference signal (CSI-RS).

61. The method according to any one of claims 40 to 45, wherein in a case where the target type of spatial filter prediction mechanism is the second type of spatial filter prediction mechanism and the terminal device performs a spatial filter prediction, the first capability information further comprises at least one of following:
a maximum number of reference signal resources included in the second reference signal set and supported by the terminal device;
a maximum number of reference signal resources included in the third reference signal set and supported by the terminal device;
a maximum number of spatial filters included in the third prediction data set and supported by the terminal device;
a maximum number of spatial filters included in the fourth prediction data set and supported by the terminal device;
a maximum value of P supported by the terminal device;
a number of receiving spatial filters of the terminal device; or
a number of receiving antenna panels of the terminal device.

62. The method according to claim 61, wherein the method further comprises:
transmitting, by the network device, third information;
wherein the third information is used for configuring at least one of following: the second reference signal set, the third reference signal set, the third prediction data set, or the fourth prediction data set; or
the third information is used for activating at least one of following: one second reference signal set among a pre-configured plurality of second reference signal sets, one third reference signal set among a pre-configured plurality of third reference signal sets, one third prediction data set among a pre-configured plurality of third prediction data sets, or one fourth prediction data set among a pre-configured plurality of fourth prediction data sets.

63. The method according to claim 62, wherein the method further comprises:
receiving, by the network device, second prediction information;
wherein the second prediction information comprises at least one of following: the identification information groups of the P spatial filters, or the link quality information groups corresponding to the P spatial filters.

64. The method according to claim 63, wherein link quality information in the link quality information groups corresponding to the P spatial filters is represented in a differential manner.

65. The method according to any one of claims 40 to 45, wherein in a case where the target type of spatial filter prediction mechanism is the second type of spatial filter prediction mechanism and the network device performs a spatial filter prediction, the first capability information further comprises at least one of following:
a maximum number of reference signal resources included in the first reference signal set and supported by the terminal device;
a maximum number of reference signal resources included in the second reference signal set and supported by the terminal device;
a maximum number of pieces of identification information of spatial filters supporting reporting and/or a maximum number of pieces of link quality information corresponding to the spatial filters in one measurement result report of the terminal device;
a number of receiving spatial filters of the terminal device; or
a number of receiving antenna panels of the terminal device.

66. The method according to claim 65, wherein the method further comprises:
transmitting, by the network device, fourth information;
wherein the fourth information is used for configuring the second reference signal set and the third reference signal set; or the fourth information is used for activating one second reference signal set from a pre-configured plurality of second reference signal sets, and for activating one third reference signal set from a pre-configured plurality of third reference signal sets.

67. The method according to claim 66, wherein the method further comprises:
receiving, by the network device, a measurement result of the second reference signal set and a measurement result of the third reference signal set;
wherein the measurement result of the second reference signal set comprises at least one of following: the identification information of the spatial filters measured based on the second reference signal set, or the link quality information corresponding to the spatial filters measured based on the second reference signal set; and
the measurement result of the third reference signal set comprises at least one of following: the identification information of the spatial filters measured based on the third reference signal set, or the link quality information corresponding to the spatial filters measured based on the third reference signal set.

68. The method according to claim 67, wherein the link quality information corresponding to the spatial filters measured based on the second reference signal set is represented in a differential manner, and/or the link quality information corresponding to the spatial filters measured based on the third reference signal set is represented in a differential manner.

69. The method according to claim 67 or 68, wherein the method further comprises:
inputting, by the network device, the measurement result of the second reference signal set and the measurement result of the third reference signal set into a tenth network model, and outputting, by the network device, the identification information groups of the P spatial filters and/or the link quality information groups corresponding to the P spatial filters;
wherein the tenth network model is a network model that meets the second type of spatial filter prediction mechanism.

70. The method according to claim 69, wherein the tenth network model is determined by the network device, or the tenth network model is determined and indicated by the terminal device.

71. The method according to claim 67 or 68, wherein the method further comprises:
inputting, by the network device, the measurement result of the second reference signal set and the measurement result of the third reference signal set into an eleventh network model, and outputting, by the network device, the identification information groups of the P spatial filters; and inputting, by the network device, the measurement result of the second reference signal set and the measurement result of the third reference signal set into a twelfth network model, and outputting, by the network device, the link quality information groups corresponding to the P spatial filters;
wherein the eleventh network model and the twelfth network model are network models that meet the second type of spatial filter prediction mechanism.

72. The method according to claim 71, wherein
the eleventh network model is determined by the network device, or the eleventh network model is determined and indicated by the terminal device; and/or
the twelfth network model is determined by the network device, or the twelfth network model is determined and indicated by the terminal device.

73. The method according to any one of claims 61 to 72, wherein the method further comprises:
transmitting, by the network device, second indication information; wherein the second indication information is used for indicating a predicted identification information group of a spatial filter used in the identification information groups of the P spatial filters.

74. The method according to claim 73, wherein the second indication information is at least one TCI state indication.

75. The method according to any one of claims 61 to 74, wherein
the second reference signal set comprises at least one of following reference signals: an SSB, or a CSI-RS; and/or
the third reference signal set comprises at least one of following reference signals: an SSB, or a CSI-RS.

76. The method according to any one of claims 39 to 75, wherein
the spatial filters comprise a transmitting spatial filter; or
the spatial filters comprise a transmitting spatial filter and a receiving spatial filter.

77. A terminal device, comprising:
a communication unit, configured to transmit first capability information;
wherein the first capability information is used for indicating whether the terminal device supports a target type of spatial filter prediction mechanism, and within the target type of spatial filter prediction mechanism, one or more network models are used to predict a spatial-domain filter group spatial filter prediction.

78. A network device, comprising:
a communication unit, configured to receive first capability information;
wherein the first capability information is used for indicating whether a terminal device supports a target type of spatial filter prediction mechanism, and within the target type of spatial filter prediction mechanism, one or more network models are used to predict a spatial-domain filter group spatial filter prediction.

79. A terminal device, comprising: a processor and a memory, wherein the memory is configured to store a computer program, and the processor is configured to call the computer program stored in the memory and run the computer program, to enable the terminal device to perform the method according to any one of claims 1 to 38.

80. A network device, comprising: a processor and a memory, wherein the memory is configured to store a computer program, and the processor is configured to call the computer program stored in the memory and run the computer program, to enable the network device to perform the method according to any one of claims 39 to 76.

81. A chip, comprising: a processor, configured to call a computer program from a memory and run the computer program, to enable a device equipped with the chip to perform the method according to any one of claims 1 to 38.

82. A chip, comprising: a processor, configured to call a computer program from a memory and run the computer program, to enable a device equipped with the chip to perform the method according to any one of claims 39 to 76.

83. A computer-readable storage medium, configured to store a computer program, wherein when the computer program is executed, the method according to any one of claims 1 to 38 is implemented.

84. A computer-readable storage medium, configured to store a computer program, wherein when the computer program is executed, the method according to any one of claims 39 to 76 is implemented.

85. A computer program product, comprising computer program instructions, wherein when the computer program instructions are executed, the method according to any one of claims 1 to 38 is implemented.

86. A computer program product, comprising computer program instructions, wherein when the computer program instructions are executed, the method according to any one of claims 39 to 76 is implemented.

87. A computer program, wherein when the computer program is executed, the method according to any one of claims 1 to 38 is implemented.

88. A computer program, wherein when the computer program is executed, the method according to any one of claims 39 to 76 is implemented.
